# EUROPÄISCHE PATENTSCHRIFT

(11) **EP 3 609 649 B1**
(45) Veröffentlichungstag und Bekanntmachung des Hinweises auf die Patenterteilung: **13.03.2024**
(21) Anmeldenummer: 18727278.6
(22) Anmeldetag: 24.05.2018
(51) Int. Cl.: B23P 9/04, C21D 7/04

(54) **VERFAHREN ZUR NACHBEARBEITUNG EINER KURBELWELLE**
METHOD FOR POST-PROCESSING A CRANKSHAFT
PROCÉDÉ DE POST-TRAITEMENT D'UN VILEBREQUIN

(30) Priorität: 14.06.2017 DE 102017113071
(43) Veröffentlichungstag der Anmeldung: 19.02.2020
(73) Patentinhaber: Maschinenfabrik Alfing Kessler GmbH, 73433 Aalen (DE)
(72) Erfinder: REEB, Alfons, 73434 Aalen (DE); SCHMIDT, Jochen, 73560 Boebingen a. d. Rems (DE); GRIMM, Konrad, 73433 Aalen (DE)
(74) Vertreter: Lorenz, Markus
(86) Internationale Anmeldenummer: PCT/EP2018/063692
(87) Internationale Veröffentlichungsnummer: WO 2018/228793

(56) Entgegenhaltungen:
- EP-A1- 1 716 260
- EP-B1- 1 716 260
- WO-A1-2005/090617
- WO-A1-2015/141611
- DE-A1- 3 438 742
- DE-A1-102005 032 185
- JP-A- H11 333 520
- JP-A- S59 101 228
- US-A- 4 416 130

## Beschreibung

Die Erfindung betrifft ein Verfahren zur Nachbearbeitung einer Kurbelwelle, insbesondere zur Korrektur von Rundlauffehlern und/oder zur Längenkorrektur, nach dem Oberbegriff von Anspruch 1.

Aufgrund der stetig fortschreitenden Entwicklung und Leistungssteigerung von Brennkraftmaschinen und an diese gestellte strengen Emissionsforderungen werden heutige Motoren in Folge immer stärker beansprucht. Aus diesem Grund stellt die Motorenindustrie unter anderem an die hochbelastete und für die Funktion einer Brennkraftmaschine wichtige Kurbelwelle hohe Anforderungen hinsichtlich der Festigkeit. Konstruktiv besteht dabei häufig die Anforderung, dass die Kurbelwelle leicht und der Platzbedarf gering sein soll. Für die Auslegung der Kurbelwelle bedeutet dies, dass eine Erhöhung der Beanspruchbarkeit nicht über die Erhöhung des Querschnitts, also über das Widerstandsmoment der Kurbelwelle, sondern möglichst über lokale Druckeigenspannungszustände erzielt werden sollte. Aus diesem Grund werden moderne Kurbelwellen unter Verwendung der verschiedensten Bearbeitungs- und Wärmebehandlungsverfahren hergestellt, so dass die Kurbelwellen immer höheren Motorleistungen ausgesetzt werden können.

Beispiele für solche Verfahren sind thermische Behandlungen, wie die Oberflächenhärteverfahren Induktions- und Einsatzhärten, Laserhärten oder Nitrieren, sowie Kaltverfestigungsverfahren, wie Festwalzen, Kugelstrahlen oder Schlagverfestigen. Hierbei handelt es sich um gängige und zum großen Teil ausgereifte Verfahren, die für die verschiedensten Einsatzzwecke geeignet sind.

Hinsichtlich Beispielen für solche Verfahren wird auf die folgenden Druckschriften verwiesen: EP 1 479 480 A1, EP 0 788 419 B1, EP 1 612 290 A1, DE 10 2007 028 888 A1 und EP 1 034 314 B1.

Beispielsweise betrifft die WO 2015/141611 A1 ein Kaltverfestigungsverfahren zum Verfestigen einer Kurbelwelle in hoch beanspruchten Bereichen der Kurbelwelle. Es wird hierzu vorgeschlagen, mittels eines Stempels die entsprechenden Bereiche der Kurbelwelle zu verpressen bzw. umzuformen. Außerdem betrifft auch die DE 10 2005 032 185 A1 ein Verfahren zur Erhöhung der Dauerfestigkeit von Kurbelwellen durch ein Pressverfahren.

Insbesondere das Schlagverfestigen ist ein vorteilhaftes Verfahren zur Steigerung der Dauerschwingfestigkeit, insbesondere der Biegewechselfestigkeit und der Torsionswechselfestigkeit, von Kurbelwellen. Die Steigerung der Dauerfestigkeit wird dabei dadurch erreicht, dass in die beanspruchten Bereiche bei Querschnittsübergängen und Querschnittsänderungen durch Kaltverformen, vorzugsweise Hämmern mittels spezieller Schlagwerkzeuge, in die Kurbelwelle Schlagkräfte eingebracht werden. Als Beispiel für ein derartiges Verfahren wird auf die DE 34 38 742 C2 und die EP 1 716 260 B1 verwiesen.

Mit den steigenden Anforderungen an eine Brennkraftmaschine erhöhen sich außerdem die Anforderungen an Form- und Lagetoleranzen der Kurbelwelle. Besonders zu beachten sind dazu auch der Rundlauf und die Längenvorgaben für die Kurbelwelle bzw. für Abschnitte der Kurbelwelle. Die exakte Einhaltung der strengen Vorgaben stellt sich in der Praxis als schwierig heraus, insbesondere da sich der Rundlauf im Verlauf der Härte- und/oder Verfestigungsverfahren gegebenenfalls noch verändern kann und die Oberflächenbehandlungsverfahren mitunter auch eine Längenveränderung der Kurbelwelle bzw. von Abschnitten der Kurbelwelle zur Folge haben können. Aus diesem Grund kann es in der Praxis vorkommen, dass beispielsweise im Anschluss an eine mechanische Kaltverfestigung eine abschließende Endbearbeitung bzw. Einstellung der Kurbelwelle hinsichtlich deren Form- und Lagetoleranzen erfolgt. Dazu müssen sich die Längenmaße und der Rundlauf in den erforderlichen engen Grenzen befinden. Bekannte und übliche Verfahren hierfür sind beispielsweise das Warmpressen der Kurbelwellenrohlinge und/oder das Aufspreizen von Abschnitten der Kurbelwelle, beispielsweise derart, dass die Kurbelwelle zwischen zwei Kurbelwangen aufgespreizt wird. Mit den bekannten Verfahren zur Nachbearbeitung der Kurbelwelle kann ein optimaler Rundlauf und die Einhaltung von Maßtoleranzen ohne Beschädigung der Kurbelwelle nicht in jedem Fall garantiert werden.

Ferner ist es aus der JP H11 333520 A (Grundlage für den Oberbegriff des Anspruchs 1) bekannt, durch einen Festwalzvorgang im Rahmen der Verfestigung einer Kurbelwelle in die Kurbelwelle eingebrachte Fehler durch ein anschließendes, gezieltes weiteres Festwalzen wieder zu korrigieren. Ein ähnliches Verfahren ist auch aus der JP S59 101228 A bekannt. Die Kaltverfestigung durch Festwalzen ist allerdings nicht für alle Anwendungen gleichermaßen geeignet und es besteht daher Bedarf, die Kurbelwellenbearbeitung insgesamt und insbesondere deren Nachbearbeitung weiter zu verbessern.

Der vorliegenden Erfindung liegt demnach die Aufgabe zugrunde, ein Verfahren zur Nachbearbeitung einer Kurbelwelle bereitzustellen, welches eine Korrektur von Rundlauffehlern und/oder eine Längenkorrektur mit wirtschaftlich und technisch möglichst geringem Aufwand ermöglicht und keine nachteilige Bauteilschädigung verursacht.

Diese Aufgabe wird für das Verfahren durch die in Anspruch 1 aufgeführten Merkmale gelöst.

Die abhängigen Ansprüche und die nachfolgend beschriebenen Merkmale betreffen vorteilhafte Ausführungsformen und Varianten der Erfindung.

Das erfindungsgemäße Verfahren zur Nachbearbeitung einer Kurbelwelle ist vorgesehen zur Korrektur von Rundlauffehlern und/oder zur Längenkorrektur.

Darüber hinaus kann die Erfindung grundsätzlich auch zur Korrektur beliebiger Form- und/oder Lagetoleranzen einer Kurbelwelle eingesetzt werden, beispielsweise zur Sicherstellung von Rundlauf, Längen, Parallelität und/oder Rechtwinkligkeit bzw. Winkligkeit im Allgemeinen.

Besonders bevorzugt eignet sich der Einsatz der Erfindung im Zusammenhang mit der Steigerung der Dauerfestigkeit von beispielsweise Kurbelwellen mit 0,2 bis 8 m Länge oder mehr und/oder Haupt- und Pleuellagerzapfendurchmesservon 30 bis 500 mm oder mehr. Ganz besonders eignet sich die Erfindung allerdings im Zusammenhang mit Großkurbelwellen von 1,5 bis 8 m Länge oder mehr und/oder Haupt- und Pleuellagerzapfendurchmesservon 100 bis 500 mm oder mehr.

Erfindungsgemäß ist vorgesehen, dass Sektoren der Kurbelwelle, die Rundlauffehler verursachen und/oder kennzeichnen, bestimmt werden und/oder für wenigstens einen Abschnitt der Kurbelwelle eine Längenabweichung von einer Soll-Länge bestimmt wird, wonach in wenigstens einen definierten Übergangsradius zwischen Pleuellagerzapfen und Kurbelwangen und/oder zwischen Hauptlagerzapfen und den Kurbelwangen der Kurbelwelle mittels wenigstens eines Schlagwerkzeugs eine Schlagkraft zur Korrektur der Rundlauffehler und/oder der Längenabweichung eingebracht wird.

Die Pleuellagerzapfen und die Hauptlagerzapfen werden zur Vereinfachung nachfolgend teilweise auch nur als "Zapfen" bezeichnet. Der Begriff Zapfen kann dabei sowohl die Pleuellagerzapfen und die Hauptlagerzapfen bezeichnen, als auch nur die Pleuellagerzapfen oder nur die Hauptlagerzapfen. Insofern dies nicht explizit anders angegeben ist, sind hier alle drei Varianten durch den Begriff Zapfen umfasst.

Die Kurbelwelle kann verschiedene Arten von Übergangsradien, beispielsweise Hohlkehlen, zum Beispiel in Korbbogenform, oder auch hinterschnittene bzw. hinterlegte Radien bzw. Radien mit Übergängen, aufweisen. Die Übergangsradien können beispielsweise tangierend in die Lagerzapfenstellen bzw. Laufflächen der Haupt- und Pleuellagerzapfen übergehen.

Dies gilt auch für Übergänge zu Flanschen, Zapfen und sonstigen geometrischen Querschnittsveränderungen - sowohl für tangierende wie hinterlegte Radien.

Üblicherweise weist die Kurbelwelle an allen Übergängen bzw. Querschnittsänderungen Übergangsradien auf. Dies gilt insbesondere für Querschnittsänderungen zwischen Lagerzapfen und Kurbelwangen. Die Erfindung eignet sich in besonderer Weise dafür, Schlagkräfte zur Nachbearbeitung in Übergangsradien zwischen Lagerzapfen und Kurbelwangen einzubringen. Die Schlagkräfte zur Nachbearbeitung können aber auch in beliebige andere Übergangsradien bzw. in beliebige Querschnittsänderungen, insbesondere Querschnittsänderungen an den Endpartien der Kurbelwelle, z. B. bei einem Übergang auf einen Flansch, eine Scheibe oder eine Welle etc., eingebracht werden. Ein Übergangsradius, in den mittels des wenigstens einen Schlagwerkzeugs die Schlagkraft zur Korrektur der Rundlauffehler und/oder der Längenabweichung eingebracht wird, muss somit nicht unbedingt zwischen einem Pleuellagerzapfen und einer Kurbelwange oder einem Hauptlagerzapfen und einer Kurbelwange vorliegen, sondern kann an einer beliebigen Stelle der Kurbelwelle angeordnet sein. Die Begriffe "Pleuellagerzapfen", "Hauptlagerzapfen", "Flansch", "Zapfen" und/oder "Kurbelwange" können dementsprechend von einem Fachmann umgedeutet werden.

Nachfolgend wird die Erfindung im Wesentlichen durch das Einbringen von Schlagkräften in Übergangsradien zwischen Pleuellagerzapfen und Kurbelwange und/oder Hauptlagerzapfen und Kurbelwange beschrieben. Dies ist aber nicht einschränkend zu verstehen und soll nur dem besseren Verständnis bzw. der besseren Lesbarkeit dienen. Insofern im Rahmen der Erfindung auf einen Übergangsradius Bezug genommen wird kann es sich grundsätzlich um einen beliebigen Übergangsradius an einer beliebigen Stelle der Kurbelwelle handeln.

Unter dem Einbringen einer Schlagkraft kann verstanden werden, dass ein Schlagkopf eines Schlagwerkzeugs bzw. ein sog. "Döpper" einer Schlageinrichtung gegen den zu verfestigenden Bereich der Kurbelwelle, vorliegend einen Übergangsradius, schlägt. Der Schlag erfolgt dabei zielgerichtet auf die gewünschte Schlagposition bzw. die Schlagpositionen entlang des ringförmig um den Zapfen umlaufenden Übergangsradius.

Unter dem Begriff "Sektoren der Kurbelwelle, die Rundlauffehler kennzeichnen" sind Sektoren der Kurbelwelle zu verstehen, die zur Bestimmung eines jeweiligen Rundlauffehlers charakteristisch bzw. kennzeichnend sind.

Die Sektoren entlang einer mit einem Schlag versehenen Hauptdrehachse einer Kurbelwelle können z. B. axial verteilt sein. Bei einem Rundlauffehler weist die Hauptdrehachse der Kurbelwelle üblicherweise einen kurvenförmigen Verlauf auf, d. h. verläuft nicht gerade bzw. linear zwischen den beiden Enden der Kurbelwelle. Die die Rundlauffehler kennzeichnenden Sektoren können die Sektoren sein, die die Kurve, nach der die Hauptdrehachse der Kurbelwelle verläuft, definieren, insbesondere den Beginn der Kurve und/oder das Ende der Kurve (bzw. die Endbereiche der Kurbelwelle), Extremstellen bzw. Maxima und/oder Minima der Kurve und/oder Wendepunkte der Kurve.

Unter dem Begriff "Sektoren der Kurbelwelle, die Rundlauffehler verursachen" sind Sektoren der Kurbelwelle zu verstehen, die die Rundlauffehler auslösen und/oder bei denen die Rundlauffehler besonders ausgeprägt sind. Es ist dabei durchaus möglich, dass ein in einem Sektor besonders ausgeprägter Rundlauffehler durch einen in einem anderen Sektor vorliegenden Rundlauffehler verursacht bzw. ausgelöst wurde.

Die Sektoren der Kurbelwelle, die Rundlauffehler verursachen und die Sektoren der Kurbelwelle, die Rundlauffehler kennzeichnen, können auch übereinstimmen.

Die Sektoren der Kurbelwelle, die für die Korrektur(en) festgelegt werden, können unterschiedlich zu den Sektoren der Kurbelwelle sein, die den bzw. die Rundlauffehler kennzeichnen und/oder verursachen und/oder die die Längenabweichung(en) aufweisen. Die Sektoren können sich aber auch entsprechen oder zumindest teilweise entsprechen.

Bei Sektoren, die Rundlauffehler verursachen und/ oder kennzeichnen, kann es sich typischerweise um ein Teilstück der Kurbelwelle, zum Beispiel um einen Bereich zwischen zwei Kurbelwangen oder einen längeren oder kürzeren Abschnitt, gegebenenfalls auch um die ganze Kurbelwelle, handeln. Die Sektoren können gegebenenfalls auch nur punktförmig oder ring- bzw. teilringförmig (um die Kurbelwelle umlaufend) ausgebildet sein.

Die Bestimmung der Sektoren der Kurbelwelle, die Rundlauffehler verursachen und/oder kennzeichnen kann automatisiert oder manuell erfolgen.

Analog kann auch die Bestimmung des wenigstens einen Abschnitts der Kurbelwelle, der eine Längenabweichung von der Soll-Länge aufweist, automatisiert oder manuell erfolgen.

Mit einer Korrektur der Rundlauffehler und/oder der Längenabweichung ist eine verbessernde Maßnahme gemeint, die eine Reduzierung der Rundlauffehler und/oder der Längenabweichung bis hin zu einer vollständigen Beseitigung bzw. Vermeidung der Rundlauffehler und/oder der Längenabweichung zur Folge haben kann. Unter einer Korrektur der Rundlauffehler kann auch eine Einstellung es Rundlaufs verstanden werden, beispielsweise wenn ein spezifischer Rundlauf für eine Kurbelwelle gezielt vorgegeben werden soll.

Bei der Korrektur von Längenabweichungen kann der wenigstens eine Abschnitt der Kurbelwelle verlängert oder verkürzt werden. Es kann auch vorgesehen sein, dass zumindest ein Abschnitt der Kurbelwelle verlängert und zumindest ein weiterer Abschnitt der Kurbelwelle verkürzt wird.

Ein besonderer Vorteil des erfindungsgemäßen Verfahrens zur Nachbearbeitung ist, verglichen mit dem Stand der Technik, dass gleichzeitig mit der Korrektur der Rundlauffehler und/oder der Längenabweichung die Dauerfestigkeit der Kurbelwelle noch weiter erhöht werden kann. Tatsächlich führt die erfindungsgemäße Nachbearbeitung bzw. Korrektur der Rundlauffehler und/oder der Längenabweichung dadurch, dass hierfür ein Verfahren zur Schlagverfestigung eingesetzt wird, zu einer weiteren Verbesserung der Festigkeit bzw. der Robustheit der Kurbelwelle.

Wenn die Kurbelwelle, beispielsweise aufgrund der Schmiedung, Wärmebehandlung, Oberflächenhärtung oder aus sonstigen Gründen, die Soll-Länge insgesamt oder in einem Abschnitt nicht erreicht, kann die Kurbelwelle mit dem erfindungsgemäßen Verfahren zur Nachbearbeitung durch Einbringen der Schlagkräfte "gelängt" werden.

Durch die erfindungsgemäße Nachbearbeitung der Kurbelwelle nach deren Herstellung, sowie nach deren Schlagverfestigung, lässt sich eine besonders hohe Maßgenauigkeit erreichen.

Erfindungsgemäß ist vorgesehen, dass die Übergangsradien der Kurbelwelle vor der Bestimmung der Rundlauffehler und/oder der Längenabweichung schlagverfestigt werden.

Grundsätzlich könnte die Korrektur der Rundlauffehler und/oder der Längenabweichung, bei entsprechender Bestimmung der Schlagkraft, auch gleichzeitig mit einem Verfahren zum Schlagverfestigen zum Einbringen von Druckeigenspannungen in die Kurbelwelle, durchgeführt werden. Dies liegt jedoch außerhalb des Umfangs der vorliegenden Erfindung. Bei einer solchen nicht beanspruchten Lösung könnte also z. B. vorgesehen sein, dass die die Rundlauffehler verursachenden und/oder kennzeichnenden Sektoren der Kurbelwelle und/oder die Längenabweichung von der Soll-Länge kontinuierlich während eines Schlagverfestigungsverfahrens bestimmt werden, wonach die Schlagkräfte kontinuierlich angepasst werden, um gleichzeitig mit der Schlagverfestigung die Korrektur der Rundlauffehler und/oder der Längenabweichung vorzunehmen. Dies kann insbesondere zur Korrektur der Längenabweichung von Vorteil sein, da bei einer bereits schlagverfestigten Kurbelwelle der nachträgliche "Längungseffekt" geringer ist, als bei einer noch nicht schlagverfestigten Kurbelwelle.

Jedoch bevorzugt wird die Kurbelwelle allerdings zunächst schlagverfestigt, derart, dass die notwendigen bzw. gewünschten Druckeigenspannungen bereits in die Kurbelwelle eingebracht sind, bevor die Rundlauffehler und/oder die Längenabweichung bestimmt werden. Dies ist insbesondere deshalb von Vorteil, da der Schlagverfestigungsprozess zum Einbringen von Druckeigenspannungen in die Kurbelwelle gegebenenfalls eine Auswirkung auf den Rundlauf und/oder die Längenabweichung hat, der für die erfindungsgemäße Nachbearbeitung vorzugsweise berücksichtigt werden sollte.

In einer Weiterbildung kann insbesondere vorgesehen sein, dass der Abschnitt der Kurbelwelle, in dem die Längenabweichung von der Soll-Länge bestimmt wird, einem Abstand zwischen zwei Kurbelwangen, insbesondere einer sogenannten Kurbelwellenkröpfung, einer Teillänge der Kurbelwelle oder der gesamten Länge der Kurbelwelle entspricht.

Eine Korrektur von Längenabweichung kann an verschiedenen Stellen der Kurbelwelle vorteilhaft sein.

Beispielsweise kann durch das Einbringen von Schlagkräften in die beiden Übergangsradien eines Hauptlagerzapfens der Abstand der Kurbelwangen, die an den entsprechenden Hauptlagerzapfen angrenzen, vergrößert werden.

Es können durch das erfindungsgemäße Verfahren zur Nachbearbeitung mit dem Schlagverfestigen Längenveränderungen, insbesondere bei Großkurbelwellen, von bis zu 50 mm und/oder Rundlaufverbesserungen von bis zu 90 mm vorgesehen sein. Ggf. können auch noch größere Längenveränderungen und/oder Rundlaufverbesserungen vorgesehen sein.

Grundsätzlich kann eine Längenkorrektur und/oder eine Rundlaufverbesserung bereits ab Rundlauffehlern bzw. Längenabweichungen von nur wenigen zehntel Millimetern vorgesehen sein.

Es kann eine Längenveränderung zwischen 0,1 mm und 100 mm, vorzugsweise zwischen 0,5 mm und 50 mm, beispielsweise zwischen 1 mm und 25 mm, zwischen 2 mm und 15 mm und/oder zwischen 5 mm und 10 mm vorgesehen sein.

Es kann eine Rundlaufverbesserung zwischen 0,1 mm und 150 mm, vorzugsweise zwischen 0,5 mm und 90 mm, beispielsweise zwischen 1 mm und 45 mm, zwischen 2 mm und 20 mm und/oder zwischen 5 mm und 10 mm vorgesehen sein.

Es kann außerdem vorgesehen sein, dass das wenigstens eine Schlagwerkzeug eine Schlagkraft zur Korrektur der Rundlauffehler und/oder der Längenabweichung in hoch beanspruchte Bereiche der definierten Übergangsradien einbringt.

Die Erfinder haben erkannt, dass die hoch beanspruchten Bereiche der Kurbelwelle häufig auch die effektivsten Bereiche darstellen, um Schlagkräfte so einzubringen, dass Rundlauffehler und/oder Längenabweichungen korrigiert werden können. Demnach werden die Schlagkräfte vorzugsweise in hoch beanspruchte Bereiche der definierten Übergangsradien eingebracht.

Mit einem hoch beanspruchten Bereich ist vorliegend ein Bereich des jeweiligen Übergangsradius der Kurbelwelle gemeint, der besonders hohen Belastungen, insbesondere im Motorenbetrieb, beispielsweise Zugkräften etc., ausgesetzt ist. Für die Belastbarkeit der Kurbelwelle ist die Beachtung der hoch beanspruchten Bereiche der Übergangsradien von zentraler Bedeutung. In diese Bereiche sollten vorzugsweise die höchsten Druckeigenspannungen eingebracht werden. Auch aus diesem Grund kann das Einbringen der Schlagkräfte zur Korrektur in diesen Bereichen der Kurbelwelle besonders vorteilhaft sein, da die Robustheit der Kurbelwelle dann an den hoch beanspruchten Bereichen noch weiter verbessert werden kann.

Ein ringförmig um die Kurbelwelle bzw. um den Pleuellagerzapfen und/oder den Hauptlagerzapfen umlaufender Übergangsradius weist im Regelfall mehrere unterschiedlich stark beanspruchte Bereiche auf.

Beispielsweise kann ein Bereich um den sogenannten unteren Totpunkt eines Pleuellagerzapfens herum ein hoch beanspruchter Bereich im Sinne der Erfindung sein. Der untere Totpunkt ist der Bereich, der im Motorenbetrieb als Zugseite des Pleuellagerzapfens bzw. als der Druckseite entgegengesetzt bezeichnet werden kann.

In einer Weiterbildung der Erfindung kann vorgesehen sein, dass als definierte Übergangsradien nur Übergangsradien ausgewählt werden, die sich in den Sektoren befinden, die die Rundlauffehler verursachen und/oder die sich in dem wenigstens einen Abschnitt befinden, der die Längenabweichung aufweist.

Die Sektoren, in denen die Rundlauffehler besonders ausgeprägt sind, müssen nicht zwingend mit den Sektoren zusammenfallen, die die Rundlauffehler auslösen. Es ist denkbar, dass die Ursache für einen Rundlauffehler in einem Sektor liegt, der Rundlauffehler sich jedoch in einem anderen Sektor auswirkt. Es kann dabei vorgesehen sein, dass Übergangsradien in dem Sektor in dem der Rundlauffehler ausgeprägt ist und/oder Übergangsradien in dem Sektor der den Rundlauffehler verursacht, ausgewählt werden. Typischerweise ist jedoch davon auszugehen, dass die Sektoren übereinstimmen.

Es hat sich gezeigt, dass es von Vorteil ist, wenn zur Korrektur von Rundlauffehlern Schlagkräfte nur in die Übergangsradien eingebracht werden, die sich in dem Sektor befinden, der die Rundlauffehler verursacht. Wie erwähnt, können diese Sektoren auch mit den Sektoren übereinstimmen die für den Rundlauffehler kennzeichnend sind.

Das Gleiche gilt analog für die Beseitigung von Längenabweichungen. Auch hierfür ist es von Vorteil, wenn Schlagkräfte in Übergangsradien eingebracht werden, die sich in den Abschnitten befinden, in denen die Längenabweichung festgestellt wurde. Insofern sich die Längenabweichung zwischen zwei Kurbelwangen, beispielsweise einer Kurbelwangenkröpfung befindet, ist vorzugsweise vorgesehen, dass die Schlagkraft in die Übergangsradien zwischen dem Lagerzapfen und den beiden Kurbelwangen derart eingebracht wird, dass die Schlagkraft die beiden Kurbelwangen auseinanderdrückt, wodurch die Kurbelwelle bzw. die Kurbelwellenkröpfung gelängt wird.

In einer Weiterbildung kann vorgesehen sein, dass zur Korrektur der Längenabweichungen in alle Übergangsradien der Kurbelwelle eine Schlagkraft mittels des wenigstens einen Schlagwerkzeugs eingebracht wird.

Diese Maßnahme kann insbesondere dann von Vorteil sein, wenn die Gesamtlänge der Kurbelwelle von der Soll-Länge abweicht. Dadurch, dass die Längenabweichung durch eine vorzugsweise gleichmäßige "Längung" oder "Kürzung" über die gesamte Kurbelwelle verteilt ausgeglichen werden kann, kann die Gesamtlänge der Kurbelwelle zumeist korrigiert werden, ohne dass Toleranzen in Teilstücken der Kurbelwelle, beispielsweise Abstände zwischen zwei Kurbelwangen, überschritten werden.

Für eine Längenkorrektur können dabei Sektoren im Pleuellager bzw. Pleuellagerzapfen und/oder Sektoren im Hauptlager bzw. Hauptlagerzapfen ausgewählt werden, die für die gewünschte Längung oder Kürzung geeignet sind.

In einer Weiterbildung der Erfindung kann ferner vorgesehen sein, dass die Art des Rundlauffehlers bestimmt wird, insbesondere ob ein Bogenschlag, ein Zickzackschlag oder ein Rundlauffehler in den Endpartien der Kurbelwelle vorliegt, wonach die definierten Übergangsradien auf Basis der Art des Rundlauffehlers ausgewählt werden.

Die Art des Rundlauffehlers kann insbesondere durch Feststellen der die Rundlauffehler kennzeichnenden Sektoren der Kurbelwelle bestimmt werden. Beispielsweise ist ein Bogenschlag durch einen gleichmäßig gebogenen Verlauf der Hauptdrehachse der Kurbelwelle zwischen den Endpartien der Kurbelwelle gekennzeichnet. Der Kurvenverlauf der Hauptdrehachse weist somit in der Mitte der Kurbelwelle ein Maximum auf. Bei der (axialen) Position des Maximums und den Endpartien der Kurbelwelle kann es sich somit um die Sektoren der Kurbelwelle handeln, die für die Art des Bogenschlag-Rundlauffehlers charakteristisch sind und durch die die Art des Rundlauffehlers bestimmt werden kann. Bei einem Zickzackschlag wird der Kurvenverlauf der Hauptdrehachse der Kurbelwelle typischerweise weitere Extremstellen aufweisen. Bei einem Rundlauffehler in den Endpartien kann der Kurvenverlauf der Hauptdrehachse der Kurbelwelle zwischen den Endpartien gerade sein bzw. wie gewünscht verlaufen, wohingegen der Verlauf der Hauptdrehachse an den Endpartien kurvig bzw. gekrümmt ist.

In einer Weiterbildung kann insbesondere vorgesehen sein, dass die definierten Übergangsradien auf Basis von Simulationen, Berechnungen und/oder Versuchsreihen eines jeweiligen Kurbelwellentyps bestimmt werden.

Abhängig von dem jeweiligen Kurbelwellentyp können bestimmte Sektoren bzw. Abschnitte bzw. Übergangradien zur Einbringung der Schlagkraft zur Korrektur von Rundlauffehlern und/oder zur Korrektur einer Längenabweichung besonders geeignet sein. Es kann demnach von Vorteil sein, derartige Sektoren bzw. Abschnitte bzw. Übergangsradien vorab zu bestimmen.

Wie bereits dargestellt, ist die Erfindung zusätzlich auch zur Korrektur von beliebigen Form- und Lagevorgaben geeignet. In einer Weiterbildung der Erfindung kann somit auch vorgesehen sein, dass für wenigstens eine weitere Form- und Lagevorgabe eine Abweichung von einem Nennmaß bestimmt wird, wonach in wenigstens einen definierten Übergangsradius zwischen einem der Pleuellagerzapfen und einer der Kurbelwangen und/oder zwischen einem der Hauptlagerzapfen und einer der Kurbelwangen der Kurbelwelle mittels des wenigstens einen Schlagwerkzeugs eine Schlagkraft zur Korrektur der wenigstens einen weiteren Abweichung eingebracht wird.

Insbesondere können Form, Orientierung, Profil und Positionen von Bereichen der Kurbelwelle für eine erfindungsgemäße Nachbearbeitung und Korrektur vorgesehen sein.

In einer Weiterbildung der Erfindung kann vorgesehen sein, dass als definierte Übergangsradien nur Übergangsradien entweder zwischen den Pleuellagerzapfen und den Kurbelwangen oder zwischen den Hauptlagerzapfen und den Kurbelwangen ausgewählt werden.

Eine Abstellung des erfindungsgemäßen Verfahrens auf nur einen Typ von Übergangsradien kann von Vorteil sein, da das entsprechende Schlagwerkzeug während des Verfahrens dann nicht umkonfiguriert werden muss und die Prozessgeschwindigkeit somit erhöht sein kann.

Besonders bevorzugt werden als definierte Übergangsradien nur Übergangsradien zwischen den Hauptlagerzapfen und den Kurbelwangen ausgewählt.

Obwohl ein Rundlauffehler im Regelfall nur entlang des Hauptlagers der Kurbelwelle verläuft, kann auch eine Korrektur durch Einbringen einer Schlagkraft in Übergangsradien zwischen Pleuellagerzapfen und Kurbelwangen zum Ausgleich des Rundlauffehlers hilfreich sein. Grundsätzlich ist die Korrektur des Rundlauffehlers durch ein Einbringen der Schlagkräfte in Übergangsradien zwischen Hauptlagerzapfen und Kurbelwangen der Kurbelwelle allerdings zu bevorzugen.

In einer alternativen Weiterbildung kann vorgesehen sein, dass wenigstens zwei Schlagwerkzeuge eingesetzt werden und als definierte Übergangsradien wenigstens ein Übergangsradius zwischen einem der Pleuellagerzapfen und einer der angrenzenden Kurbelwangen und wenigstens ein Übergangsradius zwischen einem der Hauptlagerzapfen und einer der angrenzenden Kurbelwellen ausgewählt werden.

In Abhängigkeit des Kurbelwellentyps und/oder der Verwendung der Kurbelwelle kann eine entsprechende Auswahl der definierten Übergangsradien von Vorteil sein.

In einer besonderen Variante der Erfindung kann vorgesehen sein, dass zum Einbringen einer Schlagkraft zur Korrektur der Rundlauffehler und/oder der Längenabweichung in wenigstens einen der Übergangsradien entlang des ringförmig um die Kurbelwelle umlaufenden jeweiligen Übergangsradius ein hoch beanspruchter Bereich, ein wenig beanspruchter Bereich und dazwischen liegende Zwischenbereiche definiert werden, wonach derart schlagverfestigt wird, dass die in die Zwischenbereich eingebrachte Schlagkraft in Richtung auf den hoch beanspruchten Bereich erhöht wird.

Die Verfahren bzw. Vorrichtungen gemäß dem Stand der Technik sehen vor, dass bei der Schlagverfestigung eines Übergangsradius eine konstante Schlagkraft entlang des ringförmig um den Pleuellagerzapfen und/oder den Hauptlagerzapfen umlaufenden jeweiligen Übergangsradius eingebracht wird. Die Schlagkraft ist dabei derart gewählt, dass diese ausreicht, um genügend Druckeigenspannungen in die hoch beanspruchten Bereiche der Kurbelwelle einzubringen.

Für die Robustheit der Kurbelwelle und zur erfindungsgemäßen Korrektur der Rundlauffehler und/oder der Längenabweichung ist es allerdings nicht unbedingt erforderlich, die Schlagkräfte, die in die hoch beanspruchten Bereiche eingebracht werden, auch in die Zwischenbereiche bzw. die wenig beanspruchten Bereiche einzubringen. Dadurch kann der Aufwand für die Durchführung des erfindungsgemäßen Verfahrens reduziert bzw. optimiert werden.

Demnach kann es von Vorteil sein, Schlagkräfte bzw. hohe Schlagkräfte lediglich in den oder die hoch beanspruchten Bereiche der Übergangsradien einzubringen.

Auf Grundlage von Simulationen und Versuchsreihen haben die Erfinder mittlerweile herausgefunden, dass die Robustheit bzw. die Dauerfestigkeit der Kurbelwelle in gleichbleibender oder besserer Güte vorteilhaft auch dann erreicht werden kann, wenn die maximale Schlagkraft, die in einen bestimmten Übergangsradius eingebracht wird, lediglich in den hoch beanspruchten Bereich eingebracht wird, und wenn die Schlagkraft ausgehend von den Zwischenbereichen in Richtung auf den hoch beanspruchten Bereich erhöht wird.

Dadurch wird eine abrupte bzw. plötzliche Änderung der Schlagkraft von einem Schlag zum nachfolgenden Schlag vermieden.

Dadurch, dass die Übergangsradien nicht mehr vollständig umlaufend (mit derselben Schlagkraft) verfestigt werden, kann die Prozessgeschwindigkeit maximiert und eine Schädigung des Pleuellagerzapfens im oberen Totpunkt vermieden bzw. ausgeschlossen werden.

Durch die Fokussierung auf die hoch beanspruchten Bereiche der Übergangsradien kann sich sogar eine weitere Verbesserung der Robustheit ergeben.

Grundsätzlich kann das erfindungsgemäße Verfahren bzw. die für die Durchführung des Verfahrens verwendete Vorrichtung auch bei Kurbelwellen angewendet bzw. eingesetzt werden, die bereits vorher zur Steigerung ihrer Dauerfestigkeitseigenschaften durch andere Verfahren bearbeitet worden sind. So kann zum Beispiel eine Kurbelwelle, die durch Induktionshärten gehärtet wurde, nachträglich noch bezüglich ihrer Biege- und Torsionswechselfestigkeit durch eine Einbringung von Druckeigenspannungen mit gleichzeitiger oder anschließender Korrektur von Form- und Lagetoleranzen, insbesondere des Rundlaufs und der Länge verbessert werden.

In einer Variante der Erfindung kann vorgesehen sein, dass die in die Zwischenbereiche eingebrachte Schlagkraft stetig in Richtung auf den hoch beanspruchten Bereich erhöht wird.

Insbesondere kann ein hoch beanspruchter Bereich vorgesehen sein, der beidseitig von Zwischenbereichen umgeben ist, wodurch der hoch beanspruchte Bereich von dem wenig beanspruchten Bereich getrennt ist.

Grundsätzlich kann vorgesehen sein, dass die Schlagkraft innerhalb der Zwischenbereiche und/oder des wenig beanspruchten Bereichs einem beliebigen Verlauf folgt, wobei vorzugsweise allerdings sprungartige Änderungen der Schlagkraft vermieden werden und die Schlagkraft in dem hoch beanspruchten Bereich des Übergangsradius vorzugsweise am höchsten ist (insbesondere maximal, durchschnittlich und/oder in Summe aller einzelnen Schlagkräfte des Übergangsradius betrachtet).

Vorzugsweise wird die in die Zwischenbereiche eingebrachte Schlagkraft monoton, ganz besonders bevorzugt streng monoton, in Richtung auf den hoch beanspruchten Bereich erhöht.

Es kann vorgesehen sein, dass die in die Zwischenbereiche eingebrachte Schlagkraft gleichmäßig bzw. linear in Richtung auf den hoch beanspruchten Bereich erhöht wird.

Es ist auch möglich, die in die Zwischenbereiche eingebrachte Schlagkraft gemäß einer beliebigen mathematischen Funktion in Richtung auf den hoch beanspruchten Bereich zu erhöhen.

Es kann vorgesehen sein, dass in den wenig beanspruchten Bereich keine Schlagkraft oder nur eine Schlagkraft eingebracht wird, die geringer ist als oder gleich groß ist wie die geringste Schlagkraft, die in die Zwischenbereiche eingebracht wird.

Es kann vorzugsweise vorgesehen sein, dass in den wenig beanspruchten Bereich des Übergangsradius keine Schlagkraft eingebracht wird.

In einer Variante der Erfindung kann schließlich auch vorgesehen sein, dass in den hoch beanspruchten Bereich eine Schlagkraft eingebracht wird, die größer ist als oder gleich groß ist wie die größte Schlagkraft, die in die Zwischenbereiche des Übergangsradius eingebracht wird.

Vorzugsweise wird in jedem Bereich nur die zum Erreichen der gewünschten Dauerschwingfestigkeit und/oder zur Nachbearbeitung notwendige Schlagkraft eingebracht, wobei die Schlagkraft in Richtung auf Bereiche, für die eine andere Schlagkraft vorteilhaft ist, vorzugsweise gleichmäßig erhöht oder reduziert wird.

In einer Variante der Erfindung kann insbesondere vorgesehen sein, dass die Schlagkraft, die in den hoch beanspruchten Bereich eingebracht wird, anhand der gewünschten Dauerfestigkeit der Kurbelwelle, der gewünschten Dauerfestigkeit von Teilstücken der Kurbelwelle und/oder gewünschten Korrektur der Rundlauffehler und/oder der Längenabweichung bestimmt wird.

Es kann zum Erreichen der gewünschten Dauerfestigkeit der Kurbelwelle und/oder der gewünschten Dauerfestigkeit von Abschnitten der Kurbelwelle und/oder der gewünschten Korrektur von Rundlauffehlern und/oder zur Längenkorrektur ausreichend sein, Schlagkräfte lediglich in die hoch beanspruchten Bereichen einzubringen.

In einer Variante der Erfindung kann auch vorgesehen sein, dass die Schlagkraft, die in den hoch beanspruchten Bereich eingebracht wird, konstant ist bzw. über den hoch beanspruchten Bereich konstant gehalten wird.

In Simulationen und Versuchen hat sich herausgestellt, dass eine hohe Dauerfestigkeit bzw. Robustheit der Kurbelwelle insbesondere dadurch erreichbar ist, dass in den hoch beanspruchten Bereich eine (hohe) Schlagkraft mit einer konstanten Stärke eingebracht wird. Dies gilt insbesondere (aber nicht ausschließlich), wenn in die Zwischenbereiche, ausgehend von dem hoch beanspruchten Bereich, jeweils bezüglich ihrer Stärke abfallende Schlagkräfte, insbesondere von einem Schlag zum nachfolgenden Schlag, linear abfallende Schlagkräfte, eingebracht werden, die in dem wenig beanspruchten Bereich bis auf null reduziert werden können.

In einer Variante der Erfindung kann vorgesehen sein, dass der hoch beanspruchte Bereich entlang des ringförmig um den Pleuellagerzapfen umlaufenden Übergangsradius, ausgehend von einem höchstbelasteten Punkt des Pleuellagerzapfens, wenigstens ± 20°, vorzugsweise wenigstens ± 30°, weiter bevorzugt wenigstens ± 40°, besonders bevorzugt wenigstens ± 50°, ganz besonders bevorzugt wenigstens ± 60°, beispielsweise wenigstens ± 70°, wenigstens ± 80° oder wenigstens ± 90° beträgt.

Es kann auch eine Obergrenze für die Erstreckung des hoch beanspruchten Bereichs entlang des ringförmig um den Pleuellagerzapfen umlaufenden Übergangsradius festgelegt sein, wonach der hoch beanspruchte Bereich, ausgehend von dem höchstbelasteten Punkt des Pleuellagerzapfens, höchstens ± 90°, vorzugsweise höchstens ± 80°, weiter bevorzugt höchstens ± 70°, ganz besonders bevorzugt höchstens ± 60°, beispielsweise ± 50°, beispielsweise höchstens ± 40°, höchstens ± 30° oder höchstens ± 20° beträgt.

Bei dem höchstbelasteten Punkt des Pleuellagerzapfens handelt es sich insbesondere um den unteren Totpunkt des Pleuellagerzapfens.

Es kann somit also insbesondere vorgesehen sein, dass ausgehend von einem höchstbelasteten Punkt eines Zapfens der hoch beanspruchte Bereich entlang des Umfangs des Zapfens definiert wird.

In einer Variante der Erfindung kann außerdem vorgesehen sein, dass der hoch beanspruchte Bereich entlang des ringförmig um den Hauptlagerzapfen umlaufenden Übergangsradius, ausgehend von einem höchstbelasteten Punkt des Hauptlagerzapfens, wenigstens ± 20°, vorzugsweise wenigstens ± 30°, weiter bevorzugt wenigstens ± 40°, besonders bevorzugt wenigstens ± 50°, ganz besonders bevorzugt wenigstens ± 60°, beispielsweise wenigstens ± 70°, wenigstens ± 80° oder wenigstens ± 90° beträgt.

Es kann auch eine Obergrenze für die Erstreckung des hoch beanspruchten Bereichs entlang des ringförmig um den Hauptlagerzapfen umlaufenden Übergangsradius festgelegt sein, wonach der hoch beanspruchte Bereich, ausgehend von einem höchstbelasteten Punkt des Hauptlagerzapfens, höchstens ± 90°, vorzugsweise höchstens ± 80°, weiter bevorzugt höchstens ± 70°, ganz besonders bevorzugt höchstens ± 60°, beispielsweise höchstens ± 50°, beispielsweise höchstens ± 40°, höchstens ± 30° oder höchstens ± 20° beträgt.

Dies gilt analog auch für Übergänge zu Flanschen, Zapfen und sonstigen geometrischen Querschnittsveränderungen - sowohl für tangierende wie hinterlegte Radien.

Zur Bestimmung des hoch beanspruchten Bereichs bzw. des höchstbelasteten Punkts können Simulationen und/oder Berechnungen und/oder Versuchsreihen des jeweiligen Kurbelwellentyps herangezogen werden.

Die jeweiligen hoch beanspruchten Bereiche oder die jeweiligen höchstbelasteten Punkte der Übergangsradien können sich bei den einzelnen Übergangsradien der Kurbelwelle unterscheiden. Der hoch beanspruchte Bereich oder der höchstbelastete Punkt kann aber auch bei allen Übergangsradien, insbesondere bei einem Typ von Übergangsradien, übereinstimmen. Gegebenenfalls kann der hoch beanspruchte Bereich oder der höchstbelastete Punkt bei allen Übergangsradien zwischen Pleuellagerzapfen und Kurbelwangen einerseits und zwischen Hauptlagerzapfen und Kurbelwangen andererseits übereinstimmen.

Selbiges gilt auch für den oder die Zwischenbereiche sowie den wenig beanspruchten Bereich.

Der hoch beanspruchte Bereich kann ausgehend von dem unteren Totpunkt des Pleuellagerzapfens bzw. dem höchstbelasteten Punkt des Hauptlagerzapfens grundsätzlich eine beliebige Größe aufweisen, beispielsweise auch kleiner sein als ± 20° oder größer sein als ± 90°.

In einer Variante der Erfindung kann insbesondere festgelegt sein, dass der höchstbelastete Punkt (insbesondere bezüglich Torsion) eines Übergangsradius eines Hauptlagerzapfens im Querschnitt der Kurbelwelle auf dem Schnittpunkt des Übergangsradius des Hauptlagerzapfens mit der Verbindungslinie der Mittelpunkte des Hauptlagerzapfens und des an den Übergangsradius des Hauptlagerzapfens angrenzenden Pleuellagerzapfens liegt.

Der höchstbelastete Punkt eines Übergangsradius eines Hauptlagerzapfens kann auf einer dem unteren Totpunkt eines angrenzenden Pleuellagerzapfens abgewandten Seite der Kurbelwelle angeordnet sein.

In einer Variante der Erfindung kann vorgesehen sein, dass das Einbringen der Schlagkräfte derart erfolgt, dass sich die Eindrücke eines Schlagkopfes wenigstens eines Schlagwerkzeugs entlang des ringförmig um die Kurbelwelle (insbesondere um den Pleuellagerzapfen und/oder Hauptlagerzapfen) umlaufenden jeweiligen Übergangsradius definiert überlappen.

Durch sich überlappende Schlageindrücke bzw. eng angeordnete und exakte festgelegte Schlagpositionen kann eine besonders wirksame Erhöhung der Dauerschwingfestigkeit bzw. Biegewechselfestigkeit und Torsionswechselfestigkeit bei einer gleichzeitigen Korrektur von Rundlauffehlern und Längenabweichungen erreicht werden.

In einer Variante der Erfindung kann ferner vorgesehen sein, dass der Schlagkopf des wenigstens einen Schlagwerkzeugs die Schlagkraft unter einem verstellbaren Schlagwinkel in den Übergangsradius einbringt.

Die Schlagkraft kann somit in einem Winkel in den Übergangsradius eingeleitet wird, der genau auf die im Betrieb der Kurbelwelle höchstbelastete Stelle bzw. das Beanspruchungsmaximum und dessen Erstreckung in die Kurbelwelle, unter Beachtung der Biegebelastung und der Torsionsbelastung angepasst ist.

Es kann vorgesehen sein, dass eine Schlageinrichtung verwendet wird, die einen Schlagkolben, eine Umlenkeinheit und das wenigstens eine Schlagwerkzeug aufweist, wobei das wenigstens eine Schlagwerkzeug an der Umlenkeinheit befestigt ist, und wobei der Schlagkolben über die Umlenkeinheit einen Kraftstoß auf das wenigstens eine Schlagwerkzeug überträgt, wonach der Schlagkopf des wenigstens einen Schlagwerkzeugs unter dem Schlagwinkel die Schlagkraft in den Übergangsradius einbringt.

Hierzu kann ein Schlagkolben eingesetzt werden, der einen starken Impuls bzw. einen Kraftstoß (z. B. pneumatisch, hydraulisch und/oder elektrisch erzeugt) auf den Schlagkopf überträgt.

Je nach Schlagkraft entstehen sichtbare Schlageindrücke des Schlagkopfes an den jeweiligen Schlagpositionen. Die Tiefe der Schlageindrücke und die Qualität bzw. die Tiefenwirkung der eingebrachten Druckeigenspannung hängen dabei von der gewählten Schlagkraft ab. Das Werkzeug und die Prozessparameter sind vorzugsweise auf die jeweilige Kurbelwelle und dabei ggf. auf partielle geometrische Änderungen (Querschnittsänderungen) exakt abgestimmt.

Die Schlagkraft wiederum kann durch Veränderung des Schlagwinkels individuell noch genauer auf das Beanspruchungsmaximum eingestellt bzw. ausgerichtet werden.

Es kann vorgesehen sein, dass die Kurbelwelle mittels einer Antriebseinrichtung zunächst entlang einer Drehrichtung in eine Schlagposition gedreht wird. Dies kann mit einer Lageregelung bzw. Positionsregelung (Punkt-zu-Punkt-Bewegung) der Kurbelwelle erreicht werden.

Beispielsweise kann eine Positionssteuerung eingesetzt werden, um die Kurbelwelle schrittweise bzw. getaktet von einer Schlagposition zur nächsten Schlagposition zu drehen. Im einfachsten Fall kann hierfür eine PTP-Steuerung bzw. Punktsteuerung vorgesehen sein.

Die Antriebseinrichtung kann einen Motor, insbesondere einen Elektromotor, umfassen. Bei dem Elektromotor kann es sich grundsätzlich um einen beliebigen Elektromotor, beispielsweise einen Drehstrommotor (insbesondere eine Drehstrom-Asynchronmaschine), einen Wechselstrommotor, einen Gleichstrommotor oder einen Universalmotor, handeln.

Vorzugsweise kann ein Schrittmotor verwendet werden.

Es kann auch eine zweigeteilte Antriebseinrichtung vorgesehen sein, bei der beispielsweise ein Motor an jedem Ende der Kurbelwelle vorgesehen ist, d. h. ein Synchronantrieb bzw. beidseitiger Antrieb der Kurbelwelle.

Es kann vorgesehen sein, dass das wenigstens eine Schlagwerkzeug mit einer Periodizität, vorzugsweise mit einer Taktung bzw. Schlagfrequenz von 0,5 Hz bis 30 Hz, besonders bevorzugt mit einer Taktung von 0,5 Hz bis 5 Hz und ganz besonders bevorzugt mit einer Taktung von 0,5 Hz bis 3 Hz, eine Schlagbewegung durchführt bzw. die Schlagkraft einbringt.

Selbstverständlich können auch andere Taktungen, beispielsweise auch Schlagfrequenzen zwischen 0,1 Hz und 50 Hz, vorgesehen sein, die vorgenannten Werte eignen sich jedoch ganz besonders.

Die Schlagdrücke, die von dem Schlagkolben zu der Schlagkraft umgesetzt werden, können - je nach Betrieb - zwischen 10 und 300 bar, bevorzugt zwischen 30 und 180 bar, und besonders bevorzugt zwischen 50 und 130 bar, betragen.

Die Temperatur im Bereich des zu bearbeitenden Kurbelwellensegments bzw. Übergangsradius sollte vorzugsweise nicht höher als 65°C liegen; bevorzugt werden Werte zwischen 12°C und 25°C.

Die Schlagkräfte die zur erfindungsgemäßen Nachbearbeitung in einen Übergangsradius eingebracht werden, können auch mehrfach um die Kurbelwelle bzw. den Zapfen umlaufend in den Übergangsradius eingebracht werden. Es kann also auch vorgesehen sein, Schlagkräfte in Bereiche des Übergangsradius einzubringen, in die bereits zur Nachbearbeitung der Kurbelwelle Schlagkräfte eingebracht wurden.

Es kann vorgesehen sein, mit dem Einbringen der Schlagkraft in den wenig beanspruchten Bereich zu beginnen (oder in einen Zwischenbereich, insbesondere wenn in dem wenig beanspruchten Bereich keine Schlagkraft eingebracht werden soll) und die Schlagkraft ausgehend von diesem Bereich in Richtung auf den hoch beanspruchten Bereich zu steigern.

Es kann beispielsweise vorgesehen sein, zunächst eine erste Schlagkraft entlang des ringförmig umlaufenden Übergangsradius um 360° einzubringen und anschließend eine zweite Schlagkraft, die auch mit der ersten Schlagkraft identisch sein kann, in die Zwischenbereiche und den hoch beanspruchten Bereich einzubringen und in einem dritten Umlauf eine dritte Schlagkraft, die auch mit der ersten und/oder zweiten Schlagkraft identisch sein kann, in den hoch beanspruchten Bereich einzubringen. Grundsätzlich kann die Schlagkraft also auch derart, zum Beispiel ausgehend von den Zwischenbereichen, in Richtung auf den hoch beanspruchten Bereich, erhöht werden, dass in den ringförmig umlaufenden Übergangsradius in mehreren Umläufen Schlagkräfte zur erfindungsgemäßen Nachbearbeitung eingebracht werden. Die Schlagkraft kann also auch als Summe mehrerer einzelner Schlagkräfte eingebracht werden.

Die vorliegende Offenlegung umfasst auch die Verwendung eines Verfahrens zum Schlagverfestigen von Übergangsradien einer Kurbelwelle, insbesondere zum Schlagverfestigen von Übergangsradien zwischen Pleuellagerzapfen und Kurbelwangen und/oder Übergangsradien zwischen Hauptlagerzapfen und den Kurbelwangen der Kurbelwelle, zur Nachbearbeitung der Kurbelwelle zur Korrektur von Rundlauffehlern und/oder zur Längenkorrektur.

Hinsichtlich der vorteilhaften Verwendung und möglicher Ausprägungen des bekannten Schlagverfestigungsverfahrens, um dieses zur Nachbearbeitung einzusetzen, wird auf die vor- und nachstehende Beschreibung des Verfahrens zur Nachbearbeitung der Kurbelwellen verwiesen.

Einige der Komponenten der erfindungsgemäßen Vorrichtung können grundsätzlich in ihrem Aufbau der Vorrichtung nach der EP 1 716 260 B1 entsprechen.

Die mit Hilfe der Erfindung hergestellte Kurbelwelle unterscheidet sich von herkömmlichen Kurbelwellen insbesondere dadurch, dass zu deren Nachbearbeitung Schlagkräfte in wenigstens einen der Übergangsradien eingebracht wurden. Hierdurch kann eine charakteristische Gestaltung der Kurbelwelle entstehen. Dies gilt insbesondere, wenn entlang des ringförmig umlaufenden jeweiligen Übergangsradius die Schlagkraft in verschiedenen Intensitäten bereichsweise eingebracht wurde.

Nachfolgend werden Ausführungsbeispiele der Erfindung anhand der Zeichnung näher beschrieben. Die Figuren zeigen jeweils bevorzugte Ausführungsbeispiele, in denen einzelne Merkmale der vorliegenden Erfindung in Kombination miteinander dargestellt sind.

In den Figuren sind funktionsgleiche Elemente mit denselben Bezugszeichen versehen.

Es zeigen schematisch:
- Fig. 1: eine Gesamtansicht einer Vorrichtung zur Durchführung des Verfahrens in einer ersten Ausführung;
- Fig. 2: eine perspektivische Ansicht eines Teils der Vorrichtung zur Durchführung des Verfahrens in einer zweiten Ausführung;
- Fig. 3: eine Schlageinrichtung mit zwei Schlagwerkzeugen in vergrößerter Darstellung gemäß Einzelheit "A" aus Fig. 1;
- Fig. 4: eine Schlageinrichtung mit nur einem Schlagwerkzeug;
- Fig. 5: eine beispielhafte Kurbelwelle mit beispielhaften Längenabweichungen in beispielhaften Abschnitten der Kurbelwelle;
- Fig. 6: eine beispielhafte Kurbelwelle mit einem Rundlauffehler in der Art eines Bogenschlags;
- Fig. 7: eine beispielhafte Kurbelwelle mit einem Rundlauffehler in der Art eines Zickzackschlags;
- Fig. 8: eine beispielhafte Kurbelwelle mit einem Rundlauffehler in den Endpartien der Kurbelwelle;
- Fig. 9: einen beispielhaften Ausschnitt einer weiteren Kurbelwelle;
- Fig. 10: einen Schnitt durch die Kurbelwelle der Fig. 9 nach der Schnittlinie X;
- Fig. 11: eine beispielhafte Einteilung eines ringförmig umlaufenden Übergangsradius in einen hoch beanspruchten Bereich, einen wenig beanspruchten Bereich und dazwischen liegende Zwischenbereiche eines beispielhaften Zapfens;
- Fig. 12: eine beispielhafte Verteilung von Schlagkräften entlang eines ringförmig um einen Zapfen umlaufenden Übergangsradius in einer ersten Ausführungsform;
- Fig. 13: eine beispielhafte Verteilung von Schlagkräften entlang eines ringförmig um einen Zapfen umlaufenden Übergangsradius in einer zweiten Ausführungsform;
- Fig. 14: eine beispielhafte Verteilung von Schlagkräften entlang eines ringförmig um einen Zapfen umlaufenden Übergangsradius in einer dritten Ausführungsform; und
- Fig. 15: eine beispielhafte Verteilung von Schlagkräften entlang eines ringförmig um einen Zapfen umlaufenden Übergangsradius in einer vierten Ausführungsform.

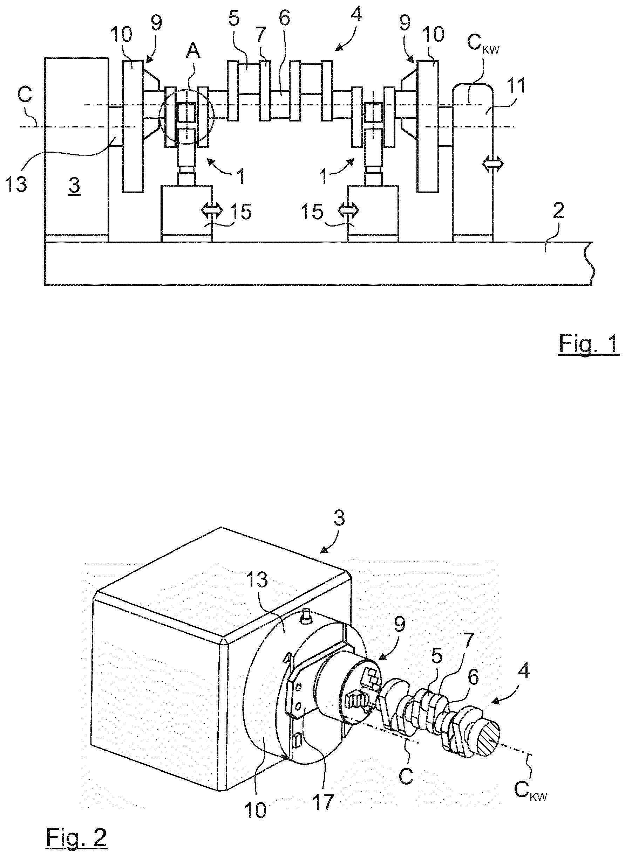

Die in Figur 1 in einer Gesamtansicht dargestellte Vorrichtung entspricht grundsätzlich in ihrem Aufbau den Vorrichtungen nach der DE 34 38 742 C2 und EP 1 716 260 B1 mit einer oder mehreren Schlageinrichtungen 1, weshalb nachfolgend nur auf die wesentlichen Teile und auf die Unterschiede zum Stand der Technik näher eingegangen wird.

Die Vorrichtung weist ein Maschinenbett 2 und eine Antriebseinrichtung 3 auf. Die Antriebseinrichtung 3 wird dazu verwendet, eine Kurbelwelle 4 entlang einer Drehrichtung in eine Schlagposition zu bringen bzw. zu drehen.

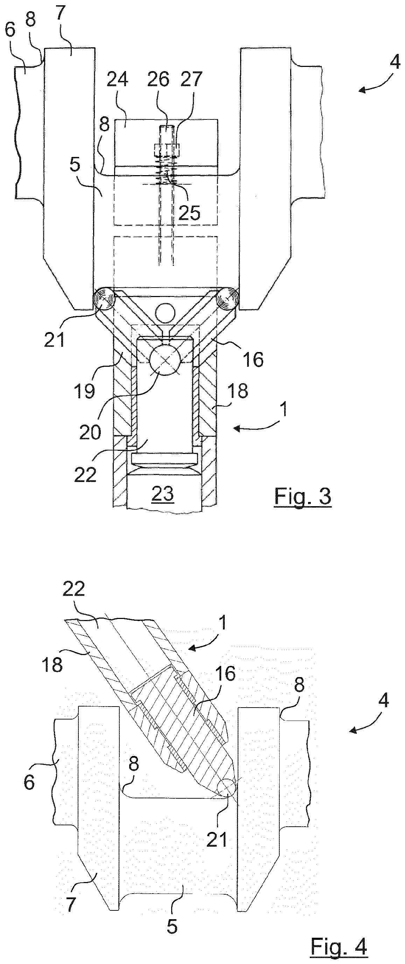

Die Kurbelwelle 4 weist Pleuellagerzapfen 5 und Hauptlagerzapfen 6, zwischen denen jeweils Kurbelwangen 7 angeordnet sind, auf. Zwischen Pleuellagerzapfen 5 und Kurbelwangen 7 sowie zwischen Hauptlagerzapfen 6 und Kurbelwangen 7 bzw. allgemein zwischen Querschnittsübergängen der Kurbelwelle 4 sind Übergangsradien 8 (vgl. Figuren 3 bis 9) ausgebildet.

An der der Antriebseinrichtung 3 zugewandten Seite der Kurbelwelle 4 ist eine Befestigungseinrichtung 9 vorgesehen, die eine Spannscheibe bzw. einen Befestigungsflansch 10 aufweist. Auf der der Antriebseinrichtung 3 abgewandten Seite der Kurbelwelle 4 ist eine Abstützung 11 vorzugsweise in der Art eines Reitstocks vorgesehen, die eine weitere Befestigungseinrichtung 9 aufweist, um die Kurbelwelle 4 drehbar aufzunehmen bzw. drehbar festzulegen. Optional oder ergänzend zur Abstützung 11 kann eine Lünette, die an einer rotationssymmetrischen Stelle positioniert wird, vorgesehen sein.

Die Antriebseinrichtung 3 vermag die Kurbelwelle 4 entlang einer Drehachse C in eine Drehbewegung zu versetzen. Dabei kann vorgesehen sein, dass die Hauptdrehachse C_{KW} der Kurbelwelle 4 außermittig von der Drehachse C der Antriebseinrichtung 3 positioniert ist, wie in Figur 1 und Figur 2 dargestellt. Hierzu können vorzugsweise Ausrichtungsmittel 17 (vgl. Figur 2) im Bereich der Befestigungseinrichtung 9 vorgesehen sein. Dabei kann vorgesehen sein, dass die Ausrichtungsmittel 17 eine Mittelachse des jeweils zu verfestigenden Zapfens 5, 6 so verschieben, dass die Mittelachse des Zapfens 5, 6 auf der Drehachse C liegt.

Für die Antriebseinrichtung 3 kann ein Direktantrieb, vorzugsweise ohne Kupplung, vorgesehen sein. Ein Motor, vorzugsweise ein Elektromotor, der Antriebseinrichtung 3 kann somit ohne Übersetzung bzw. Getriebe mit der Befestigungseinrichtung 9 bzw. mit der Kurbelwelle 4 mechanisch gekoppelt sein.

Die nachfolgend noch beispielhaft näher beschriebenen Schlageinrichtungen 1 sind jeweils in einer Verschiebe- und Justiereinrichtung 15 justierbar gehalten, um sie an die Lage der Pleuellagerzapfen 5 und der Hauptlagerzapfen 6 und an die Länge der Kurbelwelle 4 anzupassen.

Auch die Abstützung 11 kann verschiebbar eingerichtet sein, wie durch die Doppelpfeile in Figur 1 angedeutet.

In der Figur 1 sind zwei Schlageinrichtungen 1 dargestellt, grundsätzlich kann aber eine beliebige Anzahl von Schlageinrichtungen 1 vorgesehen sein, beispielsweise auch nur eine einzige Schlageinrichtung 1.

Es kann auch vorgesehen sein, dass wenigstens eine Schlageinrichtung 1 zum Einbringen von Schlagkräften in die Übergangsradien 8 der Hauptlagerzapfen 6 ausgebildet und eingerichtet ist und eine Schlageinrichtung 1 zum Einbringen von Schlagkräften in die Übergangsradien 8 der Pleuellagerzapfen ausgebildet und eingerichtet ist.

Erfindungsgemäß ist ein Verfahren zur Nachbearbeitung der Kurbelwelle 4 zur Korrektur von Rundlauffehlern und/oder zur Längenkorrektur der Kurbelwelle 4 vorgesehen.

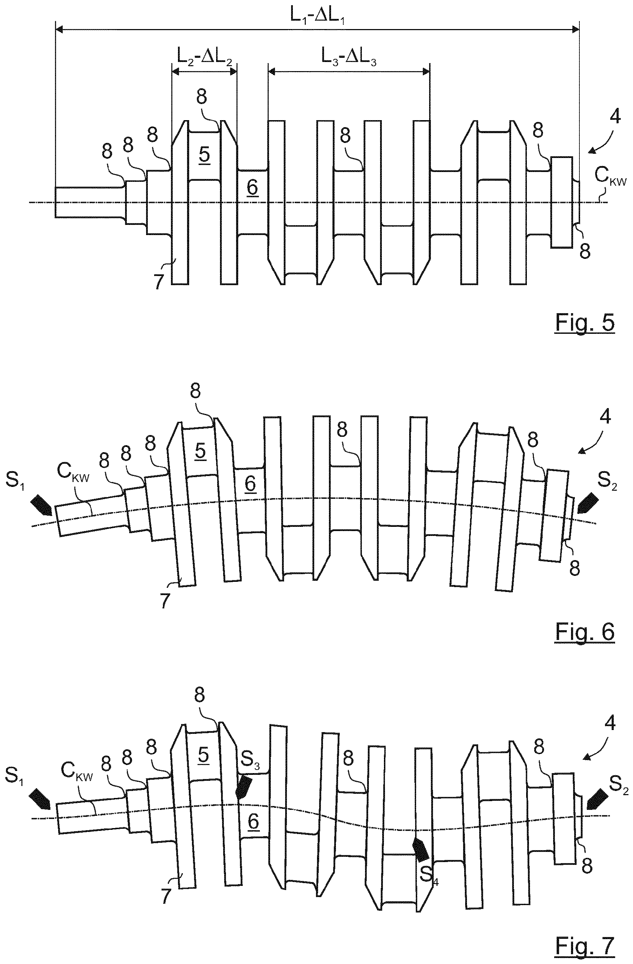

Dabei ist vorgesehen, dass zunächst Sektoren S₁, S₂, S₃, S₄, S₅, S₆ (vgl. nachfolgende Figuren 6 bis 8) der Kurbelwelle 4 bestimmt werden, die die Rundlauffehler kennzeichnen.

Alternativ oder ergänzend, vorliegend jedoch nicht dargestellt, können auch Sektoren bestimmt werden, die die Rundlauffehler verursachen. Die Sektoren die die Rundlauffehler kennzeichnen bzw. verursachen, können auch zusammenfallen, so z. B. bei den Sektoren S₃ und S₄.

Alternativ oder ergänzend wird wenigstens eine Längenabweichung ΔL₁, ΔL₂, ΔL₃ von einer Soll-Länge L₁, L₂, L₃ (vgl. nachfolgende Figur 5) wenigstens eines Abschnitts der Kurbelwelle 4 bestimmt. Erfindungsgemäß wird anschließend in wenigstens einen definierten Übergangsradius 8 zwischen einem der Pleuellagerzapfen 5 und einer der Kurbelwangen 7 und/oder in wenigstens einen Übergangsradius 8 zwischen einem der Hauptlagerzapfen 6 und einer der Kurbelwangen 7 der Kurbelwelle 4 mittels wenigstens eines Schlagwerkzeugs 16 eine Schlagkraft Fₛ zur Korrektur der Rundlauffehler und/oder der Längenabweichung eingebracht.

Zum Einbringen der Schlagkraft Fs kann die in Figur 1 dargestellte Vorrichtung, die grundsätzlich zum Schlagverfestigen einer Kurbelwelle 4 ausgebildet ist, verwendet werden. Dabei ist erfindungsgemäß vorgesehen, dass die Übergangsradien 8 der Kurbelwelle 4 vor der Bestimmung der Abweichung des Rundlaufs und/oder der Längenabweichung ΔL_{1,} ΔL₂, ΔL₃ verfestigt, vorzugsweise schlagverfestigt werden.

Die Erfindung wird zusätzlich zur Korrektur von Rundlauffehlern und/oder zur Korrektur von Längenabweichungen verwendet. Die Erfindung kann auch zur Nachbearbeitung einer Kurbelwelle 4 zur Korrektur weiterer Form- und Lagevorgaben verwendet werden. Beispielsweise kann vorgesehen sein, dass für wenigstens eine weitere Form- und Lagevorgabe eine Abweichung von einem Nennmaß bestimmt wird, wonach in wenigstens einen definierten Übergangsradius 8 zwischen einem der Pleuellagerzapfen 5 und einer der Kurbelwangen 7 und/oder in wenigstens einen Übergangsradius 8 zwischen einem der Hauptlagerzapfen 6 und einer der Kurbelwangen 7 der Kurbelwelle 4 mittels des wenigstens einen Schlagwerkzeugs 16 eine Schlagkraft Fs zur Korrektur der wenigstens einen weiteren Abweichung eingebracht wird.

In Figur 2 ist in perspektivischer Ansicht ausschnittsweise eine weitere Vorrichtung zur Durchführung des erfindungsgemäßen Verfahrens - allerdings ohne Schlageinrichtung - dargestellt. Die Vorrichtung der Figur 2 ist dabei im Wesentlichen identisch mit der Vorrichtung der Figur 1, weshalb nachfolgend nur auf die wesentlichen Unterschiede im Detail Bezug genommen wird.

Abermals ist eine Antriebseinrichtung 3 vorgesehen. Ferner ist eine Befestigungseinrichtung 9 vorgesehen, die einen Befestigungsflansch 10 und eine daran befestigte Planscheibe mit Spannbacken zur Festlegung der Kurbelwelle 4 aufweist. Die Planscheibe mit den Spannbacken der Befestigungseinrichtung 9 ist an dem Befestigungsflansch 10 verstellbar an einem Ausrichtungsmittel 17 angeordnet, wodurch sich die Längsachse C_{KW} der Kurbelwelle 4 relativ zu der Drehachse C einer Antriebswelle bzw. einer Eingangswelle 13 verschieben lässt.

Die Kurbelwelle 4 der Figur 2 weist eine von der in Figur 1 dargestellten Ausführungsform abweichende Konfiguration auf, umfasst aber grundsätzlich ebenfalls Pleuellagerzapfen 5, Hauptlagerzapfen 6 und Kurbelwangen 7.

In Figur 2 (wie auch in Figur 1) kann an dem von der Antriebseinrichtung 3 abgewandten Ende der Kurbelwelle 4 eine weitere Befestigungseinrichtung 9 vorgesehen sein, diese kann jedoch auch entfallen.

Die Erfindung kann grundsätzlich mit einer beliebigen Schlageinrichtung 1 umgesetzt werden. In Figur 3 ist beispielhaft eine Schlageinrichtung 1 der Figur 1 näher dargestellt. Sie weist einen Grundkörper 18 auf, der entsprechend dem Radius des zu bearbeitenden Kurbelwellensegments mit einer prismatischen Anlage versehen sein kann und vorzugsweise Führungen 19 aufweist, die zwei Schlagwerkzeuge 16 in deren Abstützebene führen und ihnen im Abstützwinkel um eine Umlenkeinheit 20 eine entsprechende Freiheit geben, die zur Anpassung an die maßlichen Verhältnisse der Kurbelwelle 4 vorteilhaft ist. An den vorderen Enden der beiden Schlagwerkzeuge 16 ist jeweils eine Kugel als Schlagkopf 21 angeordnet. Ein Zwischenteil 22 stellt die Verbindung zwischen einem Schlagkolben 23 und der Umlenkeinheit 20, die die Schlagenergie an die Schlagwerkzeuge 16 weitergibt, her. Das Zwischenteil 22 kann gegebenenfalls auch entfallen.

Zur Steigerung der Wirksamkeit des Schlages kann auf der von dem Grundkörper 18 abgewandten Seite des Zapfens 5, 6 ein Spannprisma 24 über Federn 25 mit einstellbaren Spannbolzen 26 mit Spannmuttern 27 befestigt werden. Hier sind auch andere konstruktive Lösungen möglich.

Es sei klargestellt, dass, sollte in einem Teil der Beschreibung "ein Schlagwerkzeug" bzw. "eine Schlageinrichtung" oder sollten "mehrere Schlagwerkzeuge/Schlageinrichtungen" erwähnt werden, grundsätzlich eine beliebige Anzahl an Schlagwerkzeugen/Schlageinrichtungen gemeint sein kann, beispielsweise zwei, drei, vier, fünf, sechs, sieben, acht, neun, zehn oder mehr. Die Bezugnahme auf eine Pluralform oder Einzahl ist lediglich zur besseren Lesbarkeit vorgesehen und nicht einschränkend.

Durch Anordnung mehrerer Schlageinrichtungen 1 über die Länge der zu bearbeitenden Kurbelwelle 4 können im Bedarfsfall alle zentrisch und gegebenenfalls exzentrisch verlaufenden Bereiche der Kurbelwelle 4 gleichzeitig bearbeitet werden.

Der Schlagkolben 23 überträgt über die Umlenkeinheit 20 einen Kraftstoß auf die Schlagwerkzeuge 16, wonach die Schlagköpfe 21 der Schlagwerkzeuge 16 die Schlagkraft Fs in die Übergangsradien 8 einbringen.

Der Ausdruck "Fs" und vergleichbare Ausdrücke in der vorliegenden Beschreibung sind nur als Platzhalter/Variablen für eine beliebige, dem Fachmann als angebracht erscheinende Schlagkraft zu verstehen. Wenn dabei in der Beschreibung auf "die Schlagkraft Fs" Bezug genommen wird, kann es sich somit jeweils um unterschiedliche oder aber auch um identische Schlagkräfte handeln.

Aus der Figur 4 ist eine Schlageinrichtung 1 ersichtlich, die mit nur einem Schlagwerkzeug 16 versehen ist. In dem gezeigten Ausführungsbeispiel ist die Schlageinrichtung 1 zur Kurbelwelle 4 vorzugsweise schräg gestellt, und zwar derart, dass das Schlagwerkzeug 16, das koaxial zur Längsachse der Schlageinrichtung 1 angeordnet ist, senkrecht auf den Bereich des zu bearbeitenden Kurbelwellensegments, vorliegend des zu bearbeitenden Übergangsradius 8, auftrifft. In diesem Fall lässt sich zwarjeweils nur ein Kurbelwellensegment bearbeiten, aber andererseits ist die konstruktive Ausgestaltung und die Kraftübertragung der Schlageinrichtung 1 hierfür besser und einfacher.

Besonders vorteilhaft erweist sich diese Ausgestaltung für die Anwendung an nicht symmetrischen Kurbelwellensegmenten der Kurbelwelle 4. Die Ausgestaltung eignet sich auch, um zur Korrektur von Rundlauffehlern und von Längenabweichungen nur in einem von zwei an denselben Zapfen 5, 6 angrenzenden Übergangsradius 8 Schlagkräfte einzubringen.

In Figur 5 ist eine beispielhafte Kurbelwelle 4 mit jeweiligen Übergangsradien 8 zwischen Pleuellagerzapfen 5 und Kurbelwange 7 bzw. Hauptlagerzapfen 6 und Kurbelwange 7 und weiterer Querschnittsübergänge mit Übergangsradien 8 dargestellt. Dabei sind beispielhafte Abschnitte dargestellt, in denen die Längenabweichungen ΔL₁, ΔL₂, ΔL₃ von einer entsprechenden Soll-Länge L₁, L₂, L₃ bestimmt werden. Ein derartiger Abschnitt der Kurbelwelle 4 kann dabei auch die gesamte Länge der Kurbelwelle 4 betreffen, die im Ausführungsbeispiel als Differenz der Längenabweichung ΔL₁ von der Soll-Länge L₁ dargestellt ist. Die dargestellte Kurbelwelle 4 der Figur 5 ist somit um die Längenabweichung ΔL₁ zu kurz. Die Abschnitte der Kurbelwelle 4, in denen die Längenabweichungen ΔL_{1,} ΔL₂, ΔL₃ bestimmt werden, können eine beliebige Länge aufweisen, die Länge kann z. B. auch dem Abstand zwischen zwei Kurbelwangen 7 entsprechen. Im Ausführungsbeispiel der Figur 5 ist beispielhaft eine Längenabweichung ΔLz von einer Soll-Länge L₂ einer sogenannten Kurbelwellenkröpfung, d. h. der Abfolge Kurbelwange 7 / Pleuellagerzapfen 5 / Kurbelwange 7, dargestellt. Grundsätzlich kann der Bereich der Kurbelwelle 4, in dem die Längenabweichung ΔL_{1,} ΔLz, ΔL₃ bestimmt wird, auch eine beliebige Teillänge der Kurbelwelle 4 betreffen. Im Ausführungsbeispiel ist auch eine Längenabweichung ΔL₃ von einer Soll-Länge L₃ im mittleren Bereich der Kurbelwelle 4 dargestellt, die beispielhaft drei Kurbelwellenkröpfungen umfasst.

Durch das erfindungsgemäße Einbringen der Schlagkraft Fs in definierte Übergangsradien 8 der Kurbelwelle 4 können die Längenabweichungen ΔL₁, ΔL₂, ΔL₃ vorteilhaft korrigiert werden. Hierfür können beispielsweise gezielt Übergangsradien 8 ausgewählt werden, die sich in Abschnitten befinden, die die Längenabweichungen ΔL_{1,} ΔLz, ΔL₃ verursachen. Es kann aber auch vorgesehen sein, insbesondere zur Korrektur der Längenabweichung ΔL₁ der gesamten Kurbelwelle 4, dass in alle Übergangsradien 8 der Kurbelwelle 4 eine Schlagkraft Fs mittels des wenigstens einen Schlagwerkzeugs 16 eingebracht wird.

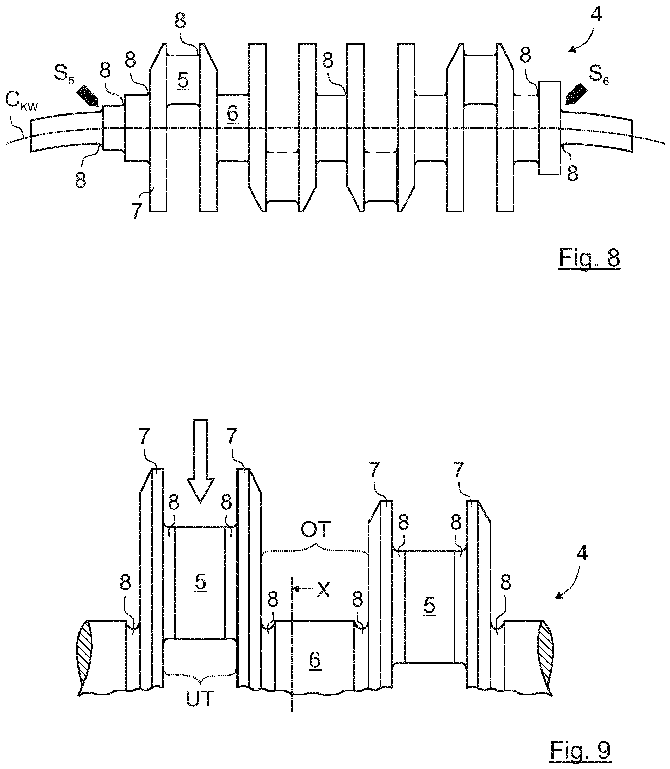

Wie eingangs erwähnt, eignet sich die Erfindung auch besonders zur Korrektur von Rundlauffehlern. Aus der Praxis sind verschiedene Arten von Rundlauffehlern bekannt. Dabei kann es von Vorteil sein, zunächst die Art des Rundlauffehlers zu bestimmen, insbesondere ob ein Bogenschlag (in Figur 6 dargestellt), ein Zickzackschlag (in Figur 7 dargestellt) oder ein Rundlauffehler in den Endpartien der Kurbelwelle 4 (in Figur 8 dargestellt) vorliegt, wonach die definierten Übergangsradien 8 auf Basis der Art des Rundlauffehlers ausgewählt werden.

In Figur 6 ist eine Kurbelwelle 4 mit einem Rundlauffehler in der Art eines Bogenschlags beispielshaft abgebildet. Ein Bogenschlag kennzeichnet sich im Wesentlichen durch einen kurvigen Verlauf der Hauptdrehachse C_{kw} der Kurbelwelle 4.

Für die Korrektur des Rundlaufs werden in den Ausführungsbeispielen zunächst die den Rundlauffehler kennzeichnenden Sektoren S₁, S₂, S₃, S₄, S₅, S₆ der Kurbelwelle 4 bestimmt. Ein Bogenschlag kann beispielsweise durch die dargestellten Sektoren S₁, S₂ an den Enden der Kurbelwelle 4 und ggf. einen weiteren (nicht dargestellten) Sektor in der Mitte der Kurbelwelle 4, der das Maximum bzw. den Extremwert des Kurvenverlaufs der Hauptdrehachse C_{KW} der Kurbelwelle 4 betrifft, gekennzeichnet sein.

In Figur 7 ist ein Rundlauffehler in der Art eines Zickzackschlags dargestellt. Ein Zickzackschlag ist gekennzeichnet durch einen kurvenförmigen Verlauf der Hauptdrehachse C_{KW} der Kurbelwelle 4 mit wenigstens zwei Extremstellen. Zusätzlich zu den kennzeichnenden Sektoren S₁, S₂ an den Enden der Kurbelwelle 4 können die Sektoren S₃, S₄ der Extremstellen des Kurvenverlaufs der Hauptdrehachse C_{KW} der Kurbelwelle 4 herangezogen werden. Eine Korrektur des in Figur 7 dargestellten Rundlauffehlers kann beispielsweise durch Einbringen einer Schlagkraft Fs in einen Übergangsradius 8 nahe den Sektoren S₃, S₄ die die Extremstellen des Kurvenverlaufs der Hauptdrehachse C_{KW} der Kurbelwelle 4 beschreiben, erfolgen.

In Figur 8 ist schließlich ein Rundlauffehler in den Endpartien der Kurbelwelle 4 dargestellt, der sich beispielsweise durch die Sektoren S₅, S₆ kennzeichnen lässt. Zwischen diesen kennzeichnenden Sektoren S₅, S₆ ist der Verlauf der Hauptdrehachse C_{KW} der Kurbelwelle 4 im Wesentlichen linear.

Zur Korrektur können vorzugsweise diejenigen Übergangsradien 8 ausgewählt werden, die sich in den Sektoren S₃, S₄, S₅, S₆ befinden. In den Sektoren S₃, S₄, S₅, S₆ ist die Ausprägung des Rundlauffehlers am größten, daher kann es sich zur Korrektur anbieten, Schlagkräfte in Übergangsradien 8 dieser Sektoren einzubringen oder in Übergangsradien 8, die an diese Sektoren S₃, S₄, S₅, S₆ angrenzen. Die erfindungsgemäß vorgesehenen Schlagkräfte können auch vorteilhaft in Übergangsradien eingebracht werden, die sich in Sektoren befinden (oder an diese angrenzen) die die Rundlauffehler verursachen.

Grundsätzlich können die definierten Übergangsradien 8 auch auf Basis von Simulationen, Berechnungen und/oder Versuchsreihen eines jeweiligen Kurbelwellentyps bestimmt werden.

Insbesondere wenn nur eine Schlageinrichtung 1 und/oder ein Schlagwerkzeug 16 verwendet werden soll, kann es von Vorteil sein, als definierte Übergangsradien 8 nur Übergangsradien 8 entweder zwischen Pleuellagerzapfen 5 und Kurbelwangen 7 oder zwischen Hauptlagerzapfen 6 und Kurbelwangen 7 auszuwählen. In diesem Fall kann ein Umbau bzw. ein Umstellen der Vorrichtung während des Verfahrens entfallen und somit die Prozessgeschwindigkeit maximiert werden.

Vorzugsweise werden als definierte Übergangsradien 8 nur Übergangsradien 8 zwischen Hauptlagerzapfen 6 und Kurbelwangen 7 ausgewählt.

Es kann auch vorgesehen sein, dass wenigstens zwei Schlagwerkzeuge 16 eingesetzt werden und als definierte Übergangsradien 8 wenigstens ein Übergangsradius 8 zwischen einem der Pleuellagerzapfen 5 und einer der angrenzenden Kurbelwange 7 und wenigstens ein Übergangsradius 8 zwischen einem der Hauptlagerzapfen 6 und einer der angrenzenden Kurbelwange 7 ausgewählt wird.

Besonders bevorzugt kann vorgesehen sein, dass das wenigstens eine Schlagwerkzeug 16 die Schlagkraft Fs zur Korrektur der Rundlauffehler und/oder der Längenabweichung in hoch beanspruchte Bereiche der definierten Übergangsradien 8 einbringt.

In Figur 9 ist ein beispielhafter Ausschnitt einer Kurbelwelle 4 mit jeweiligen Übergangsradien 8 zwischen Pleuellagerzapfen 5 und Kurbelwange 7 bzw. Hauptlagerzapfen 6 und Kurbelwangen 7 dargestellt.

In Abhängigkeit des Motorenbetriebs bzw. Einsatzzwecks der Kurbelwelle 4 können die jeweils an die Zapfen 5, 6 angrenzenden Übergangsradien 8 hoch beanspruchte Bereiche B_{MAX} aufweisen, die sich jeweils an unterschiedlichen Positionen befinden. Eine beispielhafte Belastung der Kurbelwelle 4 ist in Figur 9 durch einen Pfeil dargestellt. Der Pleuellagerzapfen 5 ist entlang des Pfeils über einen nicht dargestellten Kolben mit dem Motor verbunden. Bei der Seite des Pleuellagerzapfens 5, auf die der Pfeil zeigt, handelt es sich dabei um die sogenannte Druckseite. Auf der der Druckseite entgegengesetzten Seite, nämlich der Zugseite, befindet sich der sogenannte untere Totpunkt UT des Pleuellagerzapfens 5. Am unteren Totpunkt UT des Pleuellagerzapfens 5 ist die Belastung auf Biegung der jeweiligen Übergangsradien 8 erfahrungsgemäß am höchsten. In vorteilhafter Weise kann der hoch beanspruchte Bereich B_{MAX} an den unteren Totpunkt UT angrenzend definiert werden, vorzugsweise diesen symmetrisch umgeben.

Bei der in Figur 9 dargestellten Kurbelwelle 4 kann ferner ein höchstbelasteter Punkt des an den Pleuellagerzapfen 5 angrenzenden Hauptlagerzapfens 6 ein Bereich sein, der der Druckseite des angrenzenden Pleuellagerzapfens 5 entspricht. Zur Vereinfachung wird dieser Bereich eines Hauptlagerzapfens 6 nachfolgend als "oberer Totpunkt" OT bezeichnet.

Es kann also insbesondere vorgesehen sein, dass zum Einbringen der Schlagkraft Fs zur Korrektur der Rundlauffehler und/oder Längenabweichung in wenigstens einen der Übergangsradien 8 entlang des ringförmig (um den Pleuellagerzapfen 5 und/oder Hauptlagerzapfen 6) umlaufenden jeweiligen Übergangsradius 8 ein hoch beanspruchter Bereich B_{MAX}, ein wenig beanspruchter Bereich B_{MIN} und dazwischen liegende Zwischenbereiche Bzw definiert werden, wonach derart schlagverfestigt wird, dass die in die Zwischenbereiche Bzw eingebrachte Schlagkraft Fs in Richtung auf den hoch beanspruchten Bereich B_{MAX} erhöht wird.

Dabei kann vorgesehen sein, dass die Schlagkraft Fs, die in den hoch beanspruchten Bereich B_{MAX} eingebracht wird, anhand der gewünschten Dauerfestigkeit der Kurbelwelle 4 und/oder der gewünschten Dauerfestigkeit von Abschnitten der Kurbelwelle 4 bestimmt wird.

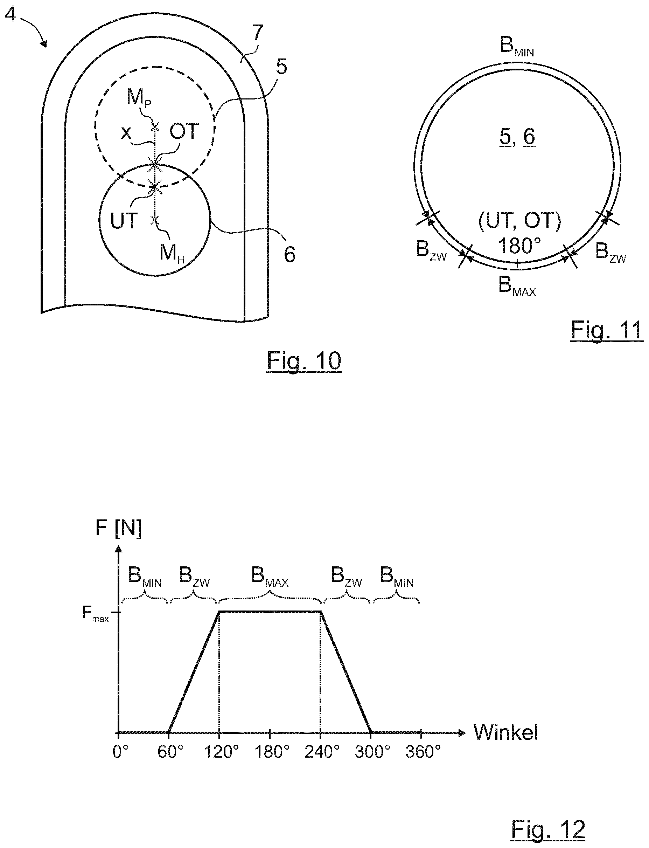

Zur besseren Verdeutlichung der Positionen der Totpunkte UT, OT ist in Figur 10 ein prinzipmäßiger Schnitt durch die Kurbelwelle 4 entlang der dargestellten Schnittlinie "X" der Figur 9 gezeigt.

Dabei ist ersichtlich, dass der höchstbelastete Punkt bzw. der obere Totpunkt OT eines Übergangsradius 8 eines Hauptlagerzapfens 6 im Querschnitt der Kurbelwelle 4 auf dem Schnittpunkt des Übergangsradius 8 des Hauptlagerzapfens 6 mit der Verbindungslinie x der Mittelpunkte M_{H}, M_{P} des Hauptlagerzapfens 6 und des an den Übergangsradius 8 des Hauptlagerzapfens 6 angrenzenden Pleuellagerzapfens 5 liegt.

Figur 11 zeigt einen Schnitt durch einen beispielhaften Zapfen 5, 6, um die mögliche Verteilung der Bereiche B_{MAX}, B_{MIN}, Bzw entlang des Umfangs des Zapfens 5, 6 darzustellen.

Vorliegend wird der höchstbelastete Punkt des Zapfens 5, 6, d. h. der untere Totpunkt UT eines Pleuellagerzapfens 5 oder der obere Totpunkt OT eines Hauptlagerzapfens 6 mit 180° bezeichnet. Ausgehend von diesem Punkt ist der hoch beanspruchte Bereich B_{MAX} entlang des ringförmig um die Kurbelwelle 4 umlaufenden Übergangsradius 8 definiert. Der hoch beanspruchte Bereich B_{MAX} kann, ausgehend von diesem Punkt vorzugsweise symmetrisch, wenigstens ± 20°, vorzugsweise wenigstens ± 30°, weiter bevorzugt wenigstens ± 40°, besonders bevorzugt wenigstens ± 50°, ganz besonders bevorzugt wenigstens ± 60°, beispielsweise wenigstens ± 70°, wenigstens ± 80° oder wenigstens ± 90° betragen.

Angrenzend an den hoch beanspruchten Bereich B_{MAX} sind zwei Zwischenbereiche Bzw definiert, die den hoch beanspruchten Bereich B_{MAX} von dem wenig beanspruchten Bereich B_{MIN} trennen. Die Zwischenbereiche Bzw können entlang des ringförmig umlaufenden Übergangsradius 8 einen beliebigen Winkelabschnitt umfassen. Selbiges gilt für den wenig beanspruchten Bereich B_{MIN}. Die jeweiligen Winkelbereiche können durch Berechnungen, Simulation und/oder Versuchsreihen, ggf. auch aus Messungen im Echtzeitbetrieb (des Motors), bestimmt werden.

Vorzugsweise wird die in die Zwischenbereiche Bzw eingebrachte Schlagkraft Fs (vorzugsweise stetig) in Richtung auf den hoch beanspruchten Bereich B_{MAX} erhöht. Damit, dass die Schlagkraft Fs erhöht wird, ist gemeint, dass die Schlagkraft Fs zwischen aufeinanderfolgenden Schlägen vorzugsweise immer weiter erhöht wird.

In den Figuren 12 bis 15 sind vier beispielhafte Verläufe der Schlagkraft Fs entlang des Umfangs eines Zapfens 5, 6, beispielsweise des Zapfens 5, 6 aus Figur 11, dargestellt.

Dabei ist in den Figuren 12, 14 und 15 die Schlagkraft Fs, die in den jeweiligen hoch beanspruchten Bereich B_{MAX} eingebracht wird, konstant.

In allen beispielhaft dargestellten Kurven ist die in den hoch beanspruchten Bereichen B_{MAX} eingebrachte Schlagkraft Fs größer oder zumindest gleich groß wie die jeweilige größte Schlagkraft Fs, die in die Zwischenbereiche Bzw eingebracht wird (und natürlich jeweils größer als die Schlagkraft Fs, die in den wenig beanspruchten Bereich B_{MIN} eingebracht wird).

Die maximale Schlagkraft F_{MAX} wird somit im hoch beanspruchten Bereich B_{MAX} des Übergangsradius 8 eingebracht.

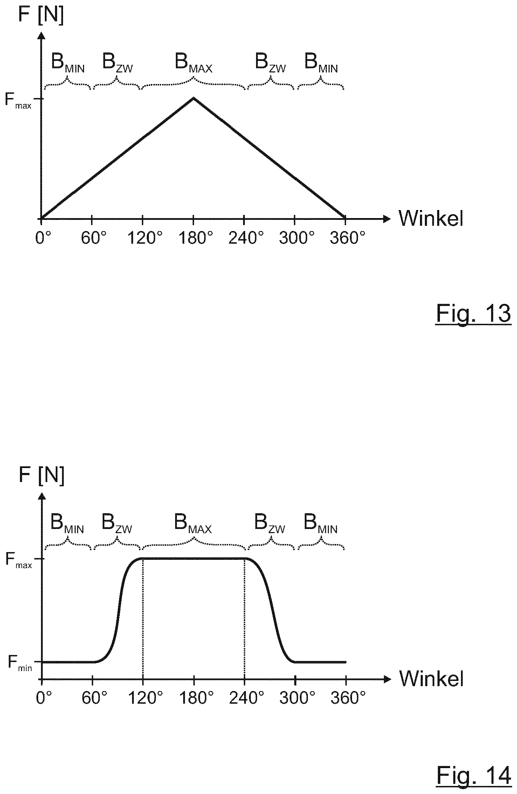

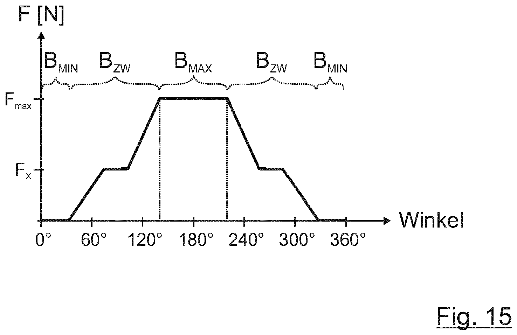

Ferner wird in den Figuren 12 und 15 eine beispielhafte Kräfteaufteilung gezeigt, bei der jeweils in den wenig beanspruchten Bereich B_{MIN} keine Schlagkraft Fs eingebracht wird. In den Figuren 13 und 14 wird hingegen in dem jeweils wenig beanspruchten Bereich B_{MIN} eine Schlagkraft Fs eingebracht, die geringer ist als die geringste Schlagkraft Fs, die in die Zwischenbereiche Bzw eingebracht wird. Im Falle der Figur 14 ist dabei eine Mindestschlagkraft Fₘᵢₙ vorgesehen, die im wenig beanspruchten Bereich B_{MIN} konstant gehalten wird. In Figur 13 hingegen wird die Schlagkraft Fs ausgehend von den Zwischenbereichen Bzw auf die dem höchstbelasteten Punkt bzw. dem unteren Totpunkt UT bzw. dem oberen Totpunkt OT entgegenliegende Position stetig linear verringert bis zu einem Minimalwert, vorliegend 0.

In Figur 12 wird die in die Zwischenbereiche Bzw eingebrachte Schlagkraft Fs ausgehend von dem wenig beanspruchten Bereich B_{MIN}, in dem vorliegend beispielhaft keine Schlagkraft eingebracht wird, gleichmäßig bzw. linear auf den hoch beanspruchten Bereich B_{MAX} erhöht.

In Figur 13 hingegen folgt der Verlauf der Schlagkraft Fs einer durchgängigen Rampe, die ausgehend von einem entlang des Umfangs der Kurbelwelle 4 dem höchstbelasteten Punkt bzw. dem unteren Totpunkt UT bzw. dem oberen Totpunkt OT gegenüberliegenden Punkt jeweils in Richtung des höchstbelasteten Punkts bzw. des unteren Totpunkts UT bzw. des oberen Totpunkts OT ansteigt. Der Verlauf der Schlagkraft Fs folgt dabei in den jeweiligen Bereichen B_{MIN}, Bzw und B_{MAX} jeweils einer eigenen Rampenfunktion, die insgesamt die dargestellte Rampe ergeben.

In Figur 14 ist ein Verlauf der Schlagkraft Fs dargestellt, der grundsätzlich dem Verlauf der Schlagkraft Fs der Figur 12 ähnelt. In den Zwischenbereichen Bzw ist allerdings im Gegensatz zu der in Figur 12 dargestellten linearen bzw. rampenförmigen Veränderung der Schlagkraft Fs ein geglätteter Kurvenverlauf dargestellt.

Grundsätzlich zeigt Figur 15 ein Diagramm, bei dem die Schlagkräfte Fs in den Zwischenbereichen Bzw in Abstufungen verändert werden.

Schließlich können beliebige Variationen und Kombinationen, insbesondere (aber nicht ausschließlich) der in den Figuren 12 bis 15 dargestellten Verläufe, vorgesehen sein. Die Erfindung ist nicht auf einen bestimmten Verlauf der Schlagkraft Fs beschränkt. Ein Verlauf der Schlagkraft Fs entlang des Umfangs des ringförmig umlaufenden Übergangsradius 8 kann auch im Hinblick auf den Motorenbetrieb bzw. Einsatzzweck der Kurbelwelle 4 ausgewählt werden.

## Patentansprüche

1. Verfahren zur Nachbearbeitung einer Kurbelwelle (4) zur Korrektur von Rundlauffehlern und/oder zur Längenkorrektur, wobei Sektoren (S₁,S₂,S₃,S₄,S₅,S₆) der Kurbelwelle (4), die Rundlauffehler verursachen und/oder kennzeichnen, bestimmt werden und/oder für wenigstens einen Abschnitt der Kurbelwelle (4) eine Längenabweichung (ΔL₁, ΔL₂, ΔL₃) von einer Soll-Länge (L₁, L₂, L₃) bestimmt wird, **dadurch gekennzeichnet, dass** in wenigstens einen definierten Übergangsradius (8) zwischen Pleuellagerzapfen (5) und Kurbelwangen (7) und/oder zwischen Hauptlagerzapfen (6) und den Kurbelwangen (7) der Kurbelwelle (4) mittels wenigstens eines Schlagwerkzeugs (16) eine Schlagkraft (Fs) zur Korrektur der Rundlauffehler und/oder der Längenabweichung (ΔL₁, ΔL₂, ΔL₃) eingebracht wird, und wobei die Übergangsradien (8) der Kurbelwelle (4) vor der Bestimmung der Rundlauffehler und/oder der Längenabweichung (ΔL₁, ΔL₂, ΔL₃) schlagverfestigt werden.

2. Verfahren nach Anspruch 1,
**dadurch gekennzeichnet, dass**
der Abschnitt der Kurbelwelle (4), in dem die Längenabweichung (ΔL₁, ΔL₂, ΔL₃) von der Soll-Länge (L₁, L₂, L₃) bestimmt wird, einem Abstand zwischen zwei Kurbelwangen (7), einer Teillänge der Kurbelwelle (4) oder der gesamten Länge der Kurbelwelle (4) entspricht.

3. Verfahren nach Anspruch 1 oder 2,
**dadurch gekennzeichnet, dass**
das wenigstens eine Schlagwerkzeug (16) eine Schlagkraft (Fs) zur Korrektur der Rundlauffehler und/oder der Längenabweichung (ΔL₁, ΔL₂, ΔL₃) in hoch beanspruchte Bereiche (B_{MAX}) der definierten Übergangsradien (8) einbringt.

4. Verfahren nach einem der Ansprüche 1 bis 3,
**dadurch gekennzeichnet, dass**
als definierte Übergangsradien (8) nur Übergangsradien (8) ausgewählt werden, die sich in den Sektoren (S₁,S₂,S₃,S₄,S₅,S₆) befinden, die die Rundlauffehler verursachen und/oder die sich in dem wenigstens einen Abschnitt befinden, der die Längenabweichungen (ΔL₁, ΔL₂, ΔL₃) aufweist.

5. Verfahren nach einem der Ansprüche 1 bis 4,
**dadurch gekennzeichnet, dass**
zur Korrektur der Längenabweichungen (ΔL₁, ΔL₂, ΔL₃) in alle Übergangsradien (8) der Kurbelwelle (4) eine Schlagkraft (Fs) mittels des wenigstens einen Schlagwerkzeugs (16) eingebracht wird.

6. Verfahren nach einem der Ansprüche 1 bis 5,
**dadurch gekennzeichnet, dass**
die Art des Rundlauffehlers bestimmt wird, insbesondere ob ein Bogenschlag, ein Zickzackschlag oder ein Rundlauffehler in den Endpartien der Kurbelwelle (4) vorliegt, wonach die definierten Übergangsradien (8) auf Basis der Art des Rundlauffehlers ausgewählt werden.

7. Verfahren nach einem der Ansprüche 1 bis 6,
**dadurch gekennzeichnet, dass**
die definierten Übergangsradien (8) auf Basis von Simulationen, Berechnungen und/oder Versuchsreihen eines jeweiligen Kurbelwellentyps bestimmt werden.

8. Verfahren nach einem der Ansprüche 1 bis 7,
**dadurch gekennzeichnet, dass**
für wenigstens eine weitere Form- und Lagevorgabe eine Abweichung von einem Nennmaß bestimmt wird, wonach in wenigstens einen definierten Übergangsradius (8) zwischen einem der Pleuellagerzapfen (5) und einer der Kurbelwangen (7) und/oder zwischen einem der Hauptlagerzapfen (6) und einer der Kurbelwangen (7) der Kurbelwelle (4) mittels des wenigstens einen Schlagwerkzeugs (16) eine Schlagkraft (Fs) zur Korrektur der wenigstens einen weiteren Abweichung eingebracht wird.

9. Verfahren nach einem der Ansprüche 1 bis 8,
**dadurch gekennzeichnet, dass**
als definierte Übergangsradien (8) nur Übergangsradien (8) entweder zwischen den Pleuellagerzapfen (5) und den Kurbelwangen (7) oder zwischen den Hauptlagerzapfen (6) und den Kurbelwangen (7) ausgewählt werden.

10. Verfahren nach einem der Ansprüche 1 bis 8,
**dadurch gekennzeichnet, dass**
wenigstens zwei Schlagwerkzeuge (16) eingesetzt werden und als definierte Übergangsradien (8) wenigstens ein Übergangsradius (8) zwischen einem der Pleuellagerzapfen (5) und einer der angrenzenden Kurbelwangen (7) und wenigstens ein Übergangsradius (8) zwischen einem der Hauptlagerzapfen (6) und einer der angrenzenden Kurbelwangen (7) ausgewählt werden.

11. Verfahren nach einem der Ansprüche 1 bis 10,
**dadurch gekennzeichnet, dass**
zum Einbringen der Schlagkraft (Fs) in wenigstens einen der Übergangsradien (8) entlang des ringförmig um die Kurbelwelle (4) umlaufenden jeweiligen Übergangsradius (8) ein hoch beanspruchter Bereich (B_{MAX}), ein wenig beanspruchter Bereich (B_{MIN}) und dazwischen liegende Zwischenbereiche (Bzw) definiert werden, wonach derart schlagverfestigt wird, dass die in die Zwischenbereiche (Bzw) eingebrachte Schlagkraft (Fs) in Richtung auf den hoch beanspruchten Bereich (B_{MAX}) erhöht wird.

## Claims

1. A method for the post-processing of a crankshaft (4) for the purposes of correcting concentricity errors and/or for the purposes of length correction, wherein sectors (S₁,S₂,S₃,S₄,S₅,S₆) of the crankshaft (4) which cause and/or characterize concentricity errors are determined and/or, for at least one portion of the crankshaft (4), a length deviation (ΔL₁, ΔL₂, ΔL₃) from a setpoint length (L₁, L₂, L₃) is determined,
**characterized in that**
an impact force (Fs) for correcting the concentricity errors and/or the length deviation (ΔL₁, ΔL₂, ΔL₃) is introduced into at least one defined transition radius (8) between connecting-rod bearing journals (5) and crank webs (7) and/or between main bearing journals (6) and the crank webs (7) of the crankshaft (4) by means of at least one impact tool (16), and wherein the transition radii (8) of the crankshaft (4) are impact-hardened, prior to the determination of the concentricity errors and/or of the length deviation (ΔL₁, ΔL₂, ΔL₃).

2. The method as claimed in claim 1,
**characterized in that**
that portion of the crankshaft (4) in which the length deviation (ΔL₁, ΔL₂, ΔL₃) from the setpoint length (L₁, L₂, L₃) is determined corresponds to a spacing between two crank webs (7), a partial length of the crankshaft (4), or the entire length of the crankshaft (4).

3. The method as claimed in claim 1 or 2,
**characterized in that**
the at least one impact tool (16) introduces an impact force (Fs) for correcting the concentricity errors and/or the length deviation (ΔL₁, ΔL₂, ΔL₃) into highly loaded regions (B_{MAX}) of the defined transition radii (8).

4. The method as claimed in any of claims 1 to 3,
**characterized in that**
only transition radii (8) situated in the sectors (S₁,S₂,S₃,S₄,S₅,S₆) which cause the concentricity errors and/or situated in the at least one portion that has the length deviations (ΔL₁, ΔL₂, ΔL₃) are selected as defined transition radii (8).

5. The method as claimed in any of claims 1 to 4,
**characterized in that,**
for the correction of the length deviations (ΔL₁, ΔL₂, ΔL₃), an impact force (Fs) is introduced into all transition radii (8) of the crankshaft (4) by means of the at least one impact tool (16).

6. The method as claimed in any of claims 1 to 5,
**characterized in that**
the nature of the concentricity error is determined, in particular whether an arcuate runout, a zigzag runout or a concentricity error in the end sections of the crankshaft (4) is present, wherein the defined transition radii (8) are selected on the basis of the nature of the concentricity error.

7. The method as claimed in any of claims 1 to 6,
**characterized in that**
the defined transition radii (8) are determined on the basis of simulations, calculations and/or series of tests of a respective crankshaft type.

8. The method as claimed in any of claims 1 to 7,
**characterized in that,**
for at least one further shape and/or position specification, a deviation from a nominal dimension is determined, following which an impact force (Fs) for correcting the at least one further deviation is introduced into at least one defined transition radius (8) between one of the connecting-rod bearing journals (5) and one of the crank webs (7) and/or between one of the main bearing journals (6) and one of the crank webs (7) of the crankshaft (4) by means of the at least one impact tool (16).

9. The method as claimed in any of claims 1 to 8,
**characterized in that**
only transition radii (8) either between the connecting-rod bearing journals (5) and the crank webs (7) or between the main bearing journals (6) and the crank webs (7) are selected as defined transition radii (8).

10. The method as claimed in any of claims 1 to 8,
**characterized in that**
at least two impact tools (16) are used and at least one transition radius (8) between one of the connecting-rod bearing journals (5) and one of the adjoining crank webs (7) and at least one transition radius (8) between one of the main bearing journals (6) and one of the adjoining crank webs (7) are selected as defined transition radii (8).

11. The method as claimed in any of claims 1 to 10,
**characterized in that,**
for the introduction of the impact force (Fs) into at least one of the transition radii (8) along the respective transition radius (8) running in annularly encircling fashion around the crankshaft (4), a highly loaded region (B_{MAX}), a lightly loaded region (B_{MIN}) and interposed intermediate regions (Bzw) are defined, following which impact hardening is performed such that the impact force (Fs) introduced into the intermediate regions (Bzw) is increased in the direction of the highly loaded region (B_{MAX}).

## Revendications

1. Procédé de post-traitement d'un vilebrequin (4) pour la correction de défauts de concentricité et/ou pour la correction de la longueur, dans lequel des secteurs (S₁,S₂,S₃,S₄,S₅,S₆) du vilebrequin (4), qui occasionne et/ou caractérise des défauts de concentricité sont déterminés et/ou un écart de longueur (ΔL₁, ΔL₂, ΔL₃) par rapport à la longueur de consigne (L₁, L₂, L₃) est déterminé pour au moins une section du vilebrequin (4),
**caractérisé en ce que**,
sur au moins un rayon de transition défini (8) entre les manetons (5) et les flasques de manivelle (7) et/ou entre les tourillons (6) et les flasques de manivelle (7) du vilebrequin (4), une force de percussion (Fs) pour la correction des défauts de concentricité et/ou de l'écart de longueur (ΔL₁, ΔL₂, ΔL₃) est appliquée au moyen d'au moins un outil de percussion (16), et dans lequel les rayons de transition (8) du vilebrequin (4) sont consolidés par percussion avant la détermination des défauts de concentricité et/ou de l'écart de longueur (ΔL₁, ΔL₂, ΔL₃).

2. Procédé selon la revendication 1,
**caractérisé en ce que**,
la section du vilebrequin (4) dans laquelle l'écart de longueur (ΔL₁, ΔL₂, ΔL₃) par rapport à la longueur de consigne (L₁, L₂, L₃) est déterminée, correspond à une distance entre deux flasques de manivelle (7), à une longueur partielle du vilebrequin (4) ou à la longueur totale du vilebrequin (4).

3. Procédé selon la revendication 1 ou 2,
**caractérisé en ce que**,
ledit au moins un outil de percussion (16) applique une force de percussion (Fs) pour la correction des défauts de concentricité et/ou de l'écart de longueur (ΔL₁, ΔL₂, ΔL₃) dans des zones fortement sollicitées (B_{MAX}) des rayons de transition définis (8).

4. Procédé selon l'une des revendications 1 à 3,
**caractérisé en ce que**,
seuls sont choisis comme rayons de transition définis (8), des rayons de transition (8) se trouvant dans les secteurs (S₁,S₂,S₃,S₄,S₅,S₆) qui sont à l'origine des défauts de concentricité et/ou qui se trouvent dans ladite au moins une section présentant les écarts de longueur (ΔL₁, ΔL₂, ΔL₃).

5. Procédé selon l'une des revendications 1 à 4,
**caractérisé en ce que**,
pour corriger les écarts de longueur (ΔL₁, ΔL₂, ΔL₃) dans tous les rayons de transition (8) du vilebrequin (4), une force de percussion (Fs) est appliquée au moyen dudit au moins un outil de percussion (16).

6. Procédé selon l'une des revendications 1 à 5,
**caractérisé en ce que**,
le type de défauts de concentricité est déterminé, notamment la présence d'un défaut en arc de cercle, d'un défaut en zigzag ou d'un défaut de concentricité des parties d'extrémité du vilebrequin (4), après quoi les rayons de transition définis (8) sont choisis sur la base du type de défauts de concentricité.

7. Procédé selon l'une des revendications 1 à 6,
**caractérisé en ce que**,
les rayons de transition définis (8) sont déterminés sur la base de simulations, de calculs et/ou de séries d'essais de chaque type de vilebrequin.

8. Procédé selon l'une des revendications 1 à 7,
**caractérisé en ce que**,
pour au moins une autre spécification de forme et de position, un écart par rapport à une dimension nominale est déterminé, après quoi une force de percussion (Fs) est appliquée au moyen dudit au moins un outil de percussion (16) à au moins un rayon de transition défini (8) entre l'un des manetons (5) et l'un des flasques de manivelle (7) et/ou entre l'un des tourillons (6) et l'un des flasques de manivelle (7) du vilebrequin (4) pour corriger ledit au moins un autre écart.

9. Procédé selon l'une des revendications 1 à 8,
**caractérisé en ce que**,
seuls des rayons de transition (8) entre les manetons (5) et les flasques de manivelle (7) ou entre les tourillons (6) et les flasques de manivelle (7) sont choisis comme rayons de transition définis (8).

10. Procédé selon l'une des revendications 1 à 8,
**caractérisé en ce que**,
au moins deux outils de percussion (16) sont mis en oeuvre et **en ce qu'**au moins un rayon de transition (8) entre l'un des manetons (5) et l'un des flasques de manivelle (7) adjacents et au moins un rayon de transition (8) entre l'un des tourillons (6) et l'un des flasques de manivelle (7) adjacents sont choisis comme rayons de transition définis (8).

11. Procédé selon l'une des revendications 1 à 10,
**caractérisé en ce que**,
pour appliquer la force de percussion (Fs) à au moins l'un des rayons de transition (8), une zone fortement sollicitée (B_{MAX}), une zone peu sollicitée (B_{MIN}) et des zones intermédiaires (Bzw) situées entre les deux sont définies le long du rayon de transition (8) concerné s'étendant de manière annulaire autour du vilebrequin (4), après quoi la consolidation par percussion est effectuée de sorte que la force de percussion (Fs) appliquée aux zones intermédiaires (Bzw) augmente en direction de la zone fortement sollicitée (B_{MAX}).
